# EUROPEAN PATENT APPLICATION

(11) **EP 4 379 387 A1**
(43) Date of publication of application: **05.06.2024**
(21) Application number: 22848447.3
(22) Date of filing: 22.07.2022
(51) Int. Cl.: G01N 35/00, G01N 35/10, G01N 1/34

(54) **SYSTEM FOR EXPRESSION, PURIFICATION, AND DETECTION AND SCREENING OF BIOLOGICAL DRUGS**

(30) Priority: 28.07.2021 CN 202110853574; 21.10.2021 CN 202111225337
(71) Applicant: Innovel Intelligent Technology Co., Ltd., Suzhou, Jiangsu 215000 (CN); Wuxi Biologics Ireland Limited, Dundalk, Co Louth A91 X56F (IE)
(72) Inventor: CHEN, Hao, Suzhou, Jiangsu 215000 (CN); MA, Zhaoyuan, Suzhou, Jiangsu 215000 (CN); TAN, Kee Wee, Shanghai 200131 (CN); ZHANG, Ying, Shanghai 200131 (CN)
(74) Representative: Arnold & Siedsma
(86) International application number: PCT/CN2022/107400
(87) International publication number: WO 2023/005842

(57) **Abstract**

A system (10) for expression, purification, and detection and screening of biological drugs comprises: one or more incubators (1), which are used for culturing biological samples to provide basic samples for detection and screening of biological drugs; a liquid operation system (3), which is used for implementing predetermined operations on the biological samples cultured in the incubator(s) (1); a sample detection platform (5), which is used for detecting the biological samples so as to facilitate screening; a transfer platform, which is used for transferring the biological samples between the incubator(s) (1) and the liquid operation system (3) and/or between the liquid operation system (3) and the sample detection platform (5); and an automatic control system (6), which is configured to control the operation of at least one of the incubator(s) (1), the liquid operation system (3), the sample detection platform (5) and the transfer platform. The system (10) for expression, purification, and detection and screening of biological drugs not only increases by order of magnitude the throughput of expression, purification, and detection and screening of biological drugs while reducing by order of magnitude the number of operators, but also greatly increases the stability, uniformity and reproducibility of a process flow by means of standardized operations.

## Description

### TECHNICAL FIELD

The present disclosure generally relates to the technical field of biological drugs. More particularly, the present disclosure relates to systems for expression, purification, and detection and screening of biological drugs, and operation methods thereof.

### BACKGROUND ART

In the research, development, assessment and evaluation of biological drugs, a large number of protein samples with different configurations need to be expressed, purified, and comprehensively detected with multiple indicators, so as to pick out products that meet application requirements from the protein samples with different configurations. As the whole process covers many process steps, such as culturing, comprehensive liquid operations (for example, expression, culture and replenishment, daily detection sampling, sample detection and purification, sample mixing, etc.), detection and screening (for example, protein concentration and purity detections, characterization analysis, and other detections). Thus, in the conventional manual operation process, it usually takes dozens of people to complete the whole process operation to reach relatively large-scale throughput.

The conventional manual operation mode not only needs a huge personnel team and a large venue, but also needs highly skilled personnel who have been specially trained, so it brings high human resource costs to research institutions or enterprises. In addition, operation by different personnel will bring about some problems related to process stability, reproducibility and the like.

Further, in the conventional manual operation mode, the research and development work is usually carried out in an open laboratory, and thus sample pollution accidents tend to occur, which may bring high material and time costs. Meanwhile, the samples and volatiles in the manual operation process in the open laboratory environment may bring biological safety-related risks to operators. Furthermore, in the conventional manual operation process, a large number of data need to be collected and analyzed for sample analysis and screening. However, the conventional manual operation mode tends to cause problems such as incomplete data recording, data loss, data conflict, and demand for long-term data saving.

With the rapid development of new protein drugs, and the requirements for rapid discovery of new targets of newly developed drugs and for rapid iteration of drugs, it is necessary to improve by order of magnitude the throughput of conventional manual laboratories, to enable the conventional manual laboratories to have a capacity of screening thousands of samples (or more) per day to meet the actual requirement for market-oriented new drug screening. In addition, similar to the screening of protein drugs, vector viruses (lentivirus, adeno-associated virus, etc.) used for treatment of new immune cells and efficacy viruses (adenovirus, adeno-associated virus, etc.) used for gene therapy also need high-throughput expression, and detection and screening means to screen out target viruses suitable for target applications from a huge synthetic sample database. All of these further aggravate the above problems.

Therefore, in the process of research, development, assessment and evaluation of new biological drugs, a new means is required, no matter for protein products or virus products and nucleic acid products, to reach the following effects: 1) an integrated whole-process (expression and culture, detection preparation, detection and screening) operation of samples with the throughput increased by order of magnitude; 2) high process stability and reproducibility in the operation process; 3) strict guarantee of biological safety of samples, operating environment, and operators in the operation process; 4) standardized collection, storage and basic analysis of data in the whole process.

### SUMMARY OF THE INVENTION

One of objects of the present disclosure is to solve one or more of the above problems and realize other additional advantages.

In a first aspect of the present disclosure, a system for expression, purification, and detection and screening of biological drugs is provided, which comprises: at least one incubator, which is used for culturing biological samples to provide basic samples for detection and screening of biological drugs; a liquid operation system, which is used for implementing predetermined operations on the biological samples cultured in the incubator; a sample detection platform, which is used for detecting the biological samples so as to facilitate screening; a transfer platform, which is used for transferring the biological samples between the incubator and the liquid operation system and/or between the liquid operation system and the sample detection platform; and an automatic control system, which is configured to control the operation of at least one of the incubator, the liquid operation system, the sample detection platform, and the transfer platform.

According to an embodiment of the present disclosure, the transfer platform comprises at least one of a cultured material transfer platform for transferring cultured biological samples between the incubator and the liquid operation system and a test sample transfer platform for transferring biological samples to be detected between the liquid operation system and the sample detection platform.

According to an embodiment of the present disclosure, at least one of the cultured material transfer platform and the test sample transfer platform comprises a robot.

According to an embodiment of the present disclosure, the robot is arranged on any one of a ground guide rail, an air guide rail, and an Automatic Guided Vehicle.

According to an embodiment of the present disclosure, the incubator comprises a housing and a culture assembly accommodated in the housing, and the culture assembly is provided on an automatic sliding table element to enable the culture assembly to slide out of or into the housing in a controlled manner.

According to an embodiment of the present disclosure, the incubator is configured to automatically control temperature and humidity of the biological samples, wherein a temperature inside the incubator is controlled between 16-38°C and a humidity inside the incubator is controlled between 70-95%.

According to an embodiment of the present disclosure, the incubator comprises a heating film for automatically heating the incubator to control the temperature inside the incubator between 16-38°C.

According to an embodiment of the present disclosure, the incubator comprises a humidifying unit, which includes an automatic water supply unit configured to supply water to the incubator in a controlled manner and an atomizer configured to atomize water from the automatic water supply unit to control the humidity in the incubator.

According to an embodiment of the present disclosure, the incubator is provided with a CO₂ pipe for replenishing CO₂ to the incubator and a CO₂ sensor for measuring a concentration of CO₂ in the incubator, so as to control the concentration of CO₂ in the incubator.

According to an embodiment of the present disclosure, the incubator is further provided with a CO₂ inflation valve for controlling the replenishment of CO₂ and a CO₂ pipe filter for removing impurities in CO₂.

According to an embodiment of the present disclosure, the incubator comprises a refrigeration compressor configured to control a temperature of the biological samples between 2-8°C when sedimentation and enrichment of the biological samples are needed.

According to an embodiment of the present disclosure, the liquid operation system is placed in a controlled laminar flow environment, so that an internal environment of the liquid operation system is isolated from its external environment.

According to an embodiment of the present disclosure, the liquid operation system is provided with a laminar flow unit configured to form the laminar flow environment in an interior of the liquid operation system by pressure difference.

According to an embodiment of the present disclosure, the laminar flow unit comprises a laminar air-supply unit including a centrifugal fan.

According to an embodiment of the present disclosure, the laminar flow unit further comprises a laminar air-return unit disposed at a bottom of the liquid operation system.

According to an embodiment of the present disclosure, the laminar air-return unit comprises a filter screen configured to filter out particulate matters in laminar gases before the laminar gases enter the interior of the liquid operation system.

According to an embodiment of the present disclosure, the liquid operation system comprises a storage compartment, a central operation compartment and at least one liquid operation compartment, wherein the storage compartment is used for storing consumables to support continuous operations of the system for expression, purification, and detection and screening of biological drugs, and the central operation compartment and the liquid operation compartment are used for implementing different operations on the biological samples.

According to an embodiment of the present disclosure, the liquid operation system comprises two liquid operation compartments disposed at two sides of the central operation compartment respectively and configured to be able to operate independently of each other and to operate in parallel.

According to an embodiment of the present disclosure, the storage compartment comprises a consumable loading channel and a sample loading channel independent of each other, so as to realize parallel loading of the consumables and the biological samples.

According to an embodiment of the present disclosure, the consumable loading channel and the sample loading channel extend in directions perpendicular to each other respectively.

According to an embodiment of the present disclosure, the consumable loading channel is provided therein with a robot transfer unit including a transfer robot.

According to an embodiment of the present disclosure, the transfer robot is arranged on a slide rail extending along the consumable loading channel and is slidable on the slide rail.

According to an embodiment of the present disclosure, a continuous loading unit is provided in the vicinity of the consumable loading channel, and the continuous loading unit is constructed in the form of a continuous loading turntable to realize continuous loading and unloading of the consumables.

According to an embodiment of the present disclosure, the continuous loading unit comprises an annular transmission element and consumable transfer trays disposed on the annular transmission element, and the transfer robot is configured to transfer the consumables onto the consumable transfer trays and/or transfer the consumables from the consumable transfer trays to other locations.

According to an embodiment of the present disclosure, the storage compartment comprises a plurality of storage drums for storing consumables, each storage drum comprises a plurality of spaces arranged in a plurality of layers and columns for storing the consumables, and wherein the transfer robot is configured to transfer the consumables to corresponding spaces of corresponding storage drums for storage.

According to an embodiment of the present disclosure, the plurality of storage drums are arranged adjacent to the central operation compartment and the liquid operation compartment, so that the transfer robot in the storage compartment is capable of transferring the consumables in the storage drums to at least one of the central operation compartment and the liquid operation compartment.

According to an embodiment of the present disclosure, the central operation compartment comprises an operation table-board mounted with at least one of following devices: a consumable lid opening/closing unit, a centrifuge unit, a vacuum filtration unit, a metal bath unit, a sample oscillation unit, a consumable storage rack, a secondary storage rack for secondary storage of materials, and a multi-degree-of-freedom robot.

According to an embodiment of the present disclosure, a laminar air-return mesh plate is provided on the operating table-board to allow a laminar returned-air to enter an internal space of the central operating compartment through the laminar air-return mesh plate.

According to an embodiment of the present disclosure, the multi-degree-of-freedom robot is mounted on a linear motor module, which includes a cross beam extending in a horizontal direction and a linear motor mounted on the cross beam and driving the multi-degree-of-freedom robot in a direction along which the cross beam extends.

According to an embodiment of the present disclosure, a space is reserved in a middle portion of the operation table-board of the central operation compartment, and the space reserved is configured to receive a consumable stage sliding table of the liquid operation compartment.

According to an embodiment of the present disclosure, the central operation compartment is configured to perform at least one of following operations: vacuum filtration operation, centrifugal separation, centrifugal enrichment, vibration mixing operation, consumable lid opening/closing operation, and metal bath incubation operation.

According to an embodiment of the present disclosure, the liquid operation compartment is configured to perform at least one of following operations: plasmid preparation and frozen tube lid opening/closing operation, culture and replenishment of biological samples, transfection expression of biological samples, magnetic bead sorting, magnetic bead purification, and pretreatment of the biological samples to be detected.

According to an embodiment of the present disclosure, the liquid operation compartment comprises at least one pipetting unit configured to transfer liquid required in a process to perform corresponding operations.

According to an embodiment of the present disclosure, the pipetting unit is configured to be movable along a X axis and comprises one or more pipetting heads each of which is configured to be movable independently along a Y axis and a Z axis inside the pipetting unit, wherein the Y axis is in a horizontal plane and perpendicular to the X axis, and the Z axis is in a vertical plane and perpendicular to the X axis and the Y axis.

According to an embodiment of the present disclosure, the pipetting unit comprises one or more movers mounted along a direction of the Y-axis, so than each pipetting head is movable along the direction of the Y-axis under driving of the movers.

According to an embodiment of the present disclosure, the pipetting unit is mounted on a linear motor gantry main frame structure, which includes two guide rail structures spaced from each other and a cross beam extending between the two guide rail structures, the pipetting unit being provided on the cross beam.

According to an embodiment of the present disclosure, the guide rail structures are configured to extend along the X-axis, and the cross beam is movable in a direction of the X-axis along the guide rail structures.

According to an embodiment of the present disclosure, the guide rail structures and the cross beam are components of a linear motor, wherein the guide rail structures constitute a stator of the linear motor and the cross beam constitutes a mover of the linear motor, and there is no mechanical connection between the guide rail structures and the cross beam.

According to an embodiment of the present disclosure, the liquid operation compartment further comprises a unit for pumping and replenishing liquid and a pump set, wherein the unit for pumping and replenishing liquid is used for providing required process fluid to the pipetting unit, and the pump set is used for pumping the process fluid into pipes of the unit for pumping and replenishing liquid.

According to an embodiment of the present disclosure, the liquid operation compartment further comprises an operation stage and a consumable stage sliding table for supporting the operation stage, and the consumable stage sliding table is configured to be able to slide out of and slide into the liquid operation compartment in a controlled manner to facilitate loading or unloading of consumables onto or from the operation stage.

According to an embodiment of the present disclosure, when the consumable stage sliding table slides out of the liquid operation compartment, it is received in a corresponding space of the central operation compartment.

According to an embodiment of the present disclosure, the liquid operation compartment comprises two or more pipetting units, which are configured to operate independently of each other or operate in parallel in two or more independent operation areas when a small number of consumables are to be operated, and configured to be integrated together to operate integrally when a large number of consumables are to be operated.

According to an embodiment of the present disclosure, the sample detection platform is configured to perform at least one of following operations: chromatographic sample preparation, high performance liquid chromatography detection, mass spectrometry detection, gel electrophoresis detection, ELISA analyzer detection, and endotoxin detection.

According to an embodiment of the present disclosure, the sample detection platform is provided with at least one of following detection devices: high performance liquid chromatographs, mass spectrometers, ELISA (Enzyme-linked immunosorbent assay) analyzers, gel electrophoresis apparatuses, endotoxin detectors, counters, imagers, and real-time fluorescence quantitative analyzers.

According to an embodiment of the present disclosure, the sample detection platform comprises a man-machine cooperative robot which is used for transferring the biological samples to be detected to different detection locations on the sample detection platform.

According to an embodiment of the present disclosure, the man-machine cooperative robot comprises a force feedback unit.

According to an embodiment of the present disclosure, the man-machine cooperative robot is provided on a linear module and movable along the linear module.

According to an embodiment of the present disclosure, the sample detection platform comprises a detection device mounting turntable including a rotary platform on which the detection devices are mounted, wherein the rotary platform is capable of rotating the detection device to a side facing the man-machine cooperative robot to implement detection operation and to a side facing operators to implement liquid replacement and/or maintenance.

According to an embodiment of the present disclosure, the rotary platform is configured to be driven by a motor via a drag chain to rotate.

In a second aspect of the disclosure, an intelligent system for expression, purification, and detection and screening of biological drugs is provided, which comprises an intelligent incubator and an automatic control system, wherein an upper right side of the intelligent incubator is provided with a cultured material transfer platform, on the right of the cultured material transfer platform is provided a full-automatic core liquid operation system, on the right of the full-automatic core liquid operation system is provided a test sample transfer platform, and on the right of the test sample transfer platform is provided a full-automatic detection platform.

As an embodiment of the present disclosure, a device illumination/purification/disinfection unit is arranged on the upper side within the intelligent incubator; a shaker mechanism driving unit is arranged on the lower side within the intelligent incubator; a device frame unit is arranged above the shaker mechanism driving unit and inside the intelligent incubator; an automatic sliding table unit is arranged on a lower side inside the device frame unit, and a shake flask loading assembly is disposed on an upper side of the automatic sliding table unit; an upper right side of the intelligent incubator is provided with a device operation and display area; an intelligent comprehensive control system unit is arranged on a right side within the intelligent incubator; and a right side of the intelligent incubator is provided with an automatic sealing door unit.

As an embodiment of the present disclosure, the full-automatic core liquid operation system includes a storage compartment, a central operation compartment and full-automatic liquid operation compartments; the central operation compartment is disposed behind the storage compartment, and the full-automatic liquid operation compartments are disposed on the left and right sides of the central operation compartment; upper sides of the storage compartment, the central operation compartment and the full-automatic liquid operation compartments are all provided with laminar flow units, and lower sides of the storage compartment, the central operation compartment and the full-automatic liquid operation compartments are all provided with laminar air-return units; refrigerated incubation storage drums are provided at a rear side within the storage compartment; a robot transfer unit is provided at a front side within the storage compartment; a continuous loading unit is arranged within the storage compartment and within the robot transfer unit, and a consumable loading channel is arranged on a right side of the storage compartment corresponding to the continuous loading unit; a temporary storage stand is arranged on a right side inside the central operation compartment; a robot module is arranged at a left rear side within the central operation compartment; a vacuum filtration unit and a metal bath unit are arranged in front of the robot module inside the central operation compartment; a laminar air-return mesh plate is arranged at a right front side within the central operation compartment; a consumable storage rack is arranged at a right rear side within the central operation compartment; an automatic centrifuge door-turnover mechanism is arranged on a right side within the central operation compartment and on an upper left side of the temporary storage stand; a consumable lid opening/closing unit is arranged on an upper right side within the central operation compartment; a linear motor gantry main frame structure is arranged on a right side within the full-automatic liquid operation compartment; at left and right sides of an end portion of the linear motor gantry main frame structure are provided pipetting units; a pump set is disposed on a left front side of the full-automatic liquid operation compartment; a left side of the full-automatic liquid operation compartment is provided a unit for pumping and replenishing liquid; a consumable stage sliding table is provided underneath the linear motor gantry main frame structure and inside the full-automatic liquid operation compartment; a bottom-compartment liquid storage unit is provided at a lower side within the full-automatic liquid operation compartment; on a left side within the full-automatic liquid operation compartment is provided an oscillation unit corresponding to the linear motor gantry main frame structure; a front side of an end portion of the linear motor gantry main frame structure is provided with a consumable carrier; and an operation stage is disposed above the linear motor gantry main frame structure.

As an embodiment of the present disclosure, the linear motor gantry main frame structure adopts double-sided linear motors or a single motor with a guide rail structure, so as to realize X-axis operation of each unit; the pipetting unit is mounted with one or two or four pipetting heads, and a corresponding number of movers are provided on a Y-axis straight line, so as to enable each pipetting head to be independently movable along the Y-axis and Z-axis; the pump set is equipped with a multi-channel peristaltic pump or other types of pump bodies to pump liquid stored in the bottom compartment to the pipes on the table-board; the unit for pumping and replenishing liquid fully automatically pumps large-capacity process liquid into a liquid transfer tank in the system, and the pipetting unit is transferred by a robot for orifice plates; after the liquid pumping operation, the pipe is subjected to fully automatic cleaning and closing operation; the consumable stage sliding table can fully automatically slide out and slide in for loading consumables such as orifice plates, shake tubes, shake flasks and the like; the bottom-compartment liquid storage unit is used to store process liquids such as culture medium, lysate, and the like; the oscillation unit realizes the mixing operation of consumables such as orifice plates, shake tubes, shake flasks and the like during the process; the consumable carrier is mounted with different types of consumables such as orifice plates, shake tubes shake flasks and the like, based on actual process requirements; the operation stage is used for attitude adjustment and temporary storage of materials in the process.

As an embodiment of the present disclosure, the full-automatic detection platform may include a turntable, a motor, a drag chain and a rotary platform, wherein the motor is arranged in an interior of the turntable, the drag chain is arranged on a right side of the turntable, and the rotary platform is disposed on an end portion of the turntable and provided with device installation and positioning holes.

As an embodiment of the present disclosure, an HPLC is provided at a left rear side of an end portion of the full-automatic detection platform, a gel electrophoresis unit is arranged on a right side of the HPLC on the end portion of the full-automatic detection platform, an ELISA analyzer is arranged at a right rear side of the end portion of the full-automatic detection platform, and mass spectrometers are symmetrically arranged at a front side of the end portion of the full-automatic detection platform; a linear module is arranged in the middle of the end portion of the full-automatic detection platform, and a man-machine cooperative robot is provided on the linear module.

As an embodiment of the present disclosure, sufficient space is reserved on the table-board of the full-automatic detection platform for adding devices, such as counter, imager, QPCR, BRA, etc.

As an embodiment of the present disclosure, the automatic control system includes a temperature sensor, a weight sensor, a differential pressure sensor, a photoelectric sensor, a camera, a code reader, an I/O acquisition module, an industrial personal computer, a drive module, an electric heating film, a robot, a pump, an electromagnetic valve, a centrifuge, a sliding table electric cylinder, a drive motor and a centrifugal fan.

The additional and/or other aspects and advantages of the present disclosure will be set forth in the following description, or are obvious from the description or can be learned through the practice of the present disclosure. The various technical features of the present disclosure can be combined arbitrarily as long as they do not contradict each other.

### BRIEF DESCRIPTION OF THE DRAWINGS

With reference to the following detailed description of the specific embodiments of the present disclosure in combination with the accompanying drawings, the above-mentioned features and advantages and other features and advantages of the present disclosure as well as their implementing means will become more apparent. In the drawings,
Fig. 1 is a front view of an overall layout of a system for expression, purification, and detection and screening of biological drugs according to an embodiment of the present disclosure;
Fig. 2a is an isometric view of the overall layout of the system for expression, purification, and detection and screening of biological drugs according to an embodiment of the present disclosure;
Fig. 2b is an isometric view of a transfer platform of the system for expression, purification, and detection and screening of biological drugs according to an embodiment of the present disclosure;
Fig. 3 is an operational flow chart of the system for expression, purification, and detection and screening of biological drugs according to an embodiment of the present disclosure;
Fig. 4 is an isometric view of a full-automatic incubator according to an embodiment of the present disclosure;
Fig. 5 is an isometric view of a full-automatic core liquid operation system according to an embodiment of the present disclosure;
Fig. 6 is a side view of the full-automatic core liquid operation system according to an embodiment of the present disclosure;
Fig. 7 is an isometric view of a storage compartment according to an embodiment of the present disclosure;
Fig. 8a is a top view of the storage compartment according to an embodiment of the present disclosure, which schematically shows a consumable loading channel and a sample loading channel;
Fig. 8b is a front view of the storage compartment according to an embodiment of the present disclosure;
Fig. 9 is an isometric view of the sample loading channel according to an embodiment of the present disclosure;
Fig. 10 is a front view of a continuous loading turntable according to an embodiment of the present disclosure;
Fig. 11 is a transferring flow chart of consumables in the storage compartment according to an embodiment of the present disclosure;
Fig. 12 is a transferring flow chart of samples in the storage compartment according to an embodiment of the present disclosure;
Fig. 13 is a front view of a central operation compartment according to an embodiment of the present disclosure;
Fig. 14 is an isometric view of a table-board of the central operation compartment according to an embodiment of the present disclosure;
Fig. 15 is an isometric view of the central operation compartment according to an embodiment of the present disclosure;
Fig. 16 is an isometric view of a consumable stage sliding table of the liquid operation compartment in a slide-out state according to an embodiment of the present disclosure;
Fig. 17 is an isometric view of an overall layout of the liquid operation compartment according to an embodiment of the present disclosure;
Fig. 18 is a top view of the overall layout of the liquid operation compartment according to an embodiment of the present disclosure;
Fig. 19 is a schematic view of real-time configuration of pipetting units according to an embodiment of the present disclosure;
Fig. 20 is a schematic view of a gantry mounting structure according to an embodiment of the present disclosure;
Fig. 21 is a working flow chart of the liquid operation compartment according to an embodiment of the present disclosure;
Fig. 22 is an isometric view of a full-automatic sample detection platform according to an embodiment of the present disclosure;
Fig. 23 is an operational flow chart of the full-automatic sample detection platform according to an embodiment of the present disclosure;
Fig. 24 is a schematic structural view of a detection device mounting turntable according to an embodiment of the present disclosure;
Fig. 25 is an architecture view of an automatic control system according to an embodiment of the present disclosure;
Fig. 26 is an architecture view of an information system according to an embodiment of the present disclosure.

In the drawings, respective reference signs indicate respective components. The examples described herein are used to illustrate exemplary aspects of the present disclosure, and these examples should not be construed as limiting the scope of the present disclosure in any way.

### DETAILED EMBODIMENTS

The present disclosure will be described below with reference to the drawings, in which several embodiments of the present disclosure are shown. It should be understood, however, that the present disclosure may be implemented in many different ways, and is not limited to the example embodiments described below. In fact, the embodiments described hereinafter are intended to make a more complete disclosure of the present disclosure and to adequately explain the scope of the disclosure to a person skilled in the art. It should also be understood that, the embodiments disclosed herein can be combined in various ways to provide many additional embodiments.

For the purpose of description, the terms "upper", "lower", "left", "right", "vertical", "horizontal", "top", "bottom", "transverse", "perpendicular" and their derivatives are all related to the orientation in the drawings of the present disclosure. However, it should be understood that the present disclosure may adopt various alternative modifications, unless otherwise clearly indicated. For example, when the apparatus in the drawings is turned over, the features previously described as being "below" other features may be described to be "above" other features at this time. The apparatus may also be otherwise oriented (rotated 90 degrees or at other orientations) and the relative spatial relationships will be correspondingly altered.

The singular forms "a/an" and "the" as used in the specification, unless clearly indicated, all contain the plural forms. The words "comprising", "containing" and "including" used in the specification indicate the presence of the claimed features, but do not preclude the presence of one or more additional features. The wording "and/or" as used in the specification includes any and all combinations of one or more of the relevant items listed.

In the specification, when an element is referred to as being "on", "attached" to, "connected" to, "coupled" with, "contacting", etc., another element, it can be directly on, attached to, connected to, coupled with or contacting the other element or intervening elements may also be present. In contrast, when an element is referred to as being "directly on", "directly attached" to, "directly connected" to, "directly coupled" with or "directly contacting" another element, there are no intervening elements present. In the specification, references to a feature that is disposed "adjacent" another feature may have portions that overlap, overlie or underlie the adjacent feature.

The present disclosure relates to a system for expression, purification, and detection and screening of biological drugs. The system according to the present disclosure may be an automatic or intelligent system, which is configured to automatically, intelligently and/or standardly realize the whole-process operations including expression, purification, detection and screening, and the like of biological drugs. This not only enables the system according to the present disclosure to reduce the operators required in the whole process by order of magnitude and increase the processing throughput in the whole process by order of magnitude, but also solves problems related to stability, uniformity and reproducibility that are easy to occur in the conventional manual operation process owing to replacement of the manual operation with the automatic or intelligent system.

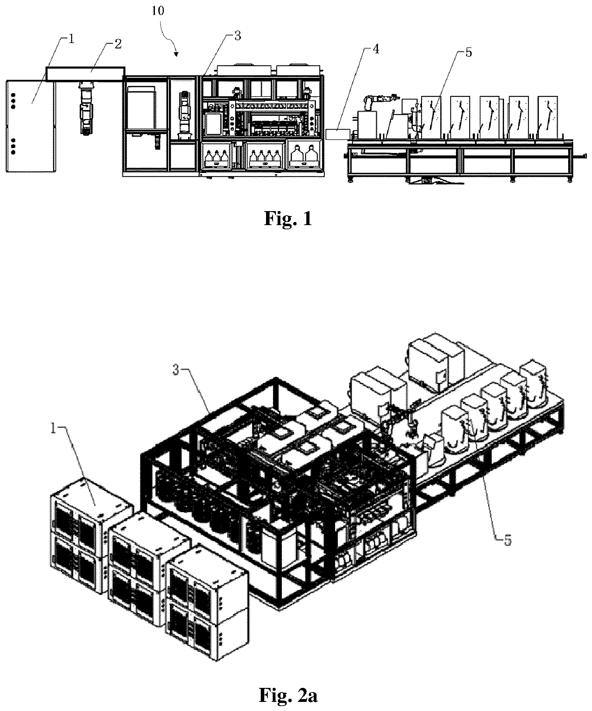

Referring first to Figs. 1 and 2a, a system 10 for expression, purification, and detection and screening of biological drugs according to an embodiment of the present disclosure is shown. The system 10 may include: one or more incubators 1 for culturing biological samples to provide basic samples for the detection and screening of biological drugs; a liquid operation system 3 for implementing predetermined operations (for example, operations related to expression, purification, harvesting and enrichment of the biological drugs) on the biological samples cultured in the incubator 1; and a sample detection platform 5 for detecting the biological samples to facilitate screening thereof. The system 10 may further include a transfer platform for transferring the biological samples between the incubator(s) and the liquid operation system and/or between the liquid operation system and the sample detection platform. In an embodiment according to the present disclosure, the transfer platform includes a cultured material transfer platform 2 for transferring the cultured biological samples between the incubator(s) 1 and the liquid operation system 3. For example, the cultured material transfer platform 2 can transfer the biological samples cultured in the incubator(s) 1 to the liquid operation system 3 for corresponding operation, and can also transfer the biological samples from the liquid operation system 3 back to the incubator(s) 1 for further culturing. The transfer platform may further include a test sample transfer platform 4 for transferring biological samples to be detected between the liquid operation system 3 and the sample detection platform 5 (for example, the test sample transfer platform 4 may be used to transfer the biological samples to be detected from the liquid operation system 3 to the sample detection platform 5) for detection and screening.

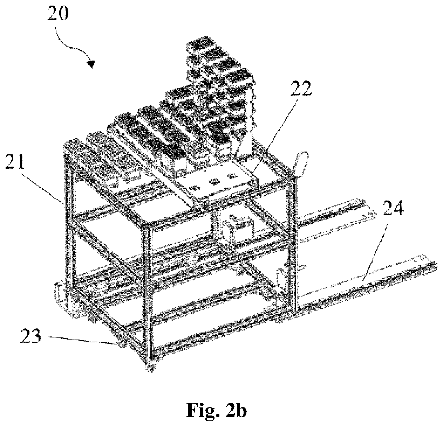

In an embodiment according to the present disclosure, the cultured material transfer platform 2 and/or the sample detection transfer platform 4 may include a robot (also referred to as a mechanical arm), such that transfer of the biological samples between the incubator(s) 1 and the liquid operation system 3 and/or transfer of the biological samples between the liquid operation system 3 and the sample detection platform 5 can be accomplished via the robot. In an embodiment according to the present disclosure, the cultured material transfer platform 2 and/or the sample detection transfer platform 4 may further include at least one of a ground guide rail and an air guide rail. The robot can move on the ground guide rail and/or the air guide rail to enable transfer of the biological samples in a wider range. In another embodiment according to the present disclosure, the cultured material transfer platform 2 and/or the sample detection transfer platform 4 may include an Automatic Guided Vehicle (AGV) 20, as shown in Fig. 2b. The AGV 20 may include a frame 21. The frame 21 may include a table-board 22 for receiving biological samples to be transferred and one or more wheels 23 for convenient movement of the AGV. In an embodiment according to the present disclosure, at least a portion of the AGV 20 may be disposed on a slide rail 24 to guide movement of the AGV 20. In an embodiment according to the present disclosure, the robot or the mechanical arm may be placed on the AGV 20 to realize transfer of the biological samples between the incubator(s) 1 and the liquid operation system 3 and/or transfer of the biological samples between the liquid operation system 3 and the sample detection platform 5.

Next, the incubator(s) 1, the liquid operation system 3 and the sample detection platform 5 of the system 10 will be described in detail.

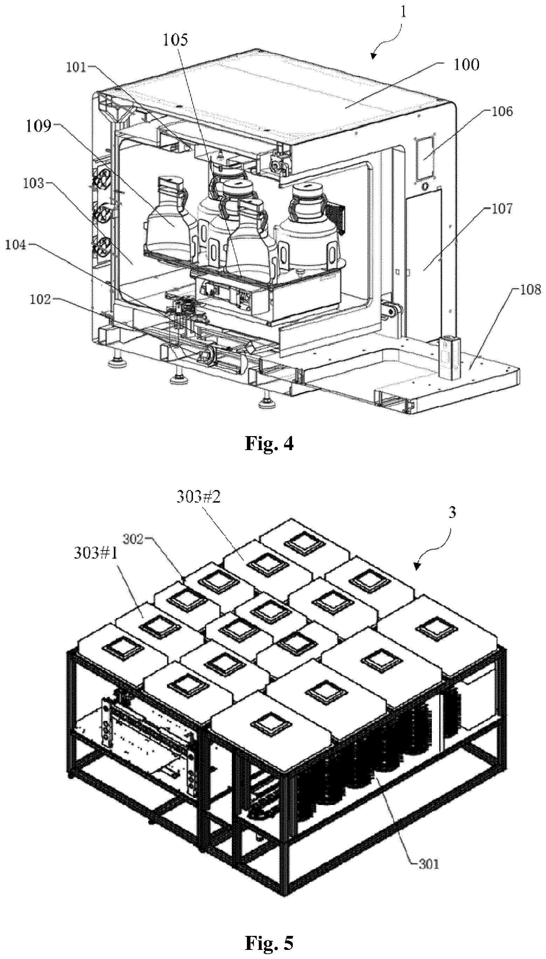

Referring to Fig. 4, the specific structure of the incubator 1 according to an embodiment of the present disclosure is shown. The incubator 1 may include a housing 100 and a culture assembly accommodated in the housing 100. The culture assembly may include one or more shake flasks 109 for holding the biological samples. The one or more shake flasks 109 may be placed on a shake flask carrier assembly 105. The shake flask carrier assembly 105 may be placed on an automatic sliding table unit 104, so that the shake flask carrier assembly 105 and the shake flasks 109 carried thereon can slide out of or into the housing 100 in a controlled manner when necessary. The shake flask carrier assembly 105 and the automatic sliding table unit 104 may be disposed within a frame unit 103. An oscillation unit (for example, a shaker mechanism or a shaker mechanism-type driving unit) 102 may be provided below the frame unit 103, so that the shake flask carrier assembly 105 and the shaker bottles 109 carried thereon can be oscillated when necessary. The incubator 1 may also be provided therein with a device illuminating/purifying/disinfecting unit 101. The device illuminating/ purifying/disinfecting unit 101 may be disposed at an upper position inside the incubator 1. A suitable device illuminating/purifying/disinfecting unit 101 may be an ultraviolet irradiation unit.

In an embodiment according to the present disclosure, the incubator 1 may be an intelligent incubator. For this purpose, the incubator 1 is provided with an intelligent comprehensive control system 107 to realize intelligent control of the incubator 1. For example, the comprehensive control system 107 can control the real-time oscillation of the oscillation unit 102, the slide-in and slide-out of the automatic sliding table unit 104, and power-on and power-off of the device illuminating/ purifying/disinfecting unit 101, and so on. In order to facilitate operation of the intelligent comprehensive control system 107, the incubator 1 may also include a device operation and display area 106. The device operation and display area 106 may include an input/output component such as a touch screen to provide a human-computer interaction interface. In an embodiment according to the present disclosure, the incubator 1 may further include an automatic sealing door unit 108. The automatic sealing door unit 108 may be automatically opened or closed under the control of the comprehensive control system 107 to open or close the incubator 1. All of these contribute to the automatic docking of the incubator 1 with the cultured material transfer platform 2. In an embodiment according to the present disclosure, it is also possible to transmit instructions to the comprehensive control system 107 via software installed in remote terminals (such as computers, smart phones or other controllers) using an intelligent network unit to realize remote control of the incubator 1.

In an embodiment according to the present disclosure, the incubator 1 may be configured to automatically control the temperature and humidity of the biological samples. For example, the incubator 1 can realize a control of temperature between 15-40°C (for example, 16~38°C, 20∼38°C, 25∼38°C, 20∼40°C, 25∼40°C, etc.) and/or a control of humidity between 70∼95%. The control of temperature of the incubator 1 may be effectuated with a heating film and a thermal insulation material. In this embodiment, the heating film may be made of a thin film heating material, which is used to automatically heat the incubator 1 to keep it in a predetermined temperature range, while the thermal insulation material may be used to reduce the temperature transfer between an internal space of the incubator 1 and the outside. In order to achieve the control of humidity, the incubator 1 may include a humidifying unit. The humidifying unit may include an automatic water supply unit and an atomizer. The atomizer can atomize the water from the automatic water supply unit to thereby control the humidity of the incubator 1. This is in contrast to conventional incubators, which require operators to put a certain amount of water therein to maintain humidity. The atomizer may be configured as an ultrasonic atomizer. The atomizer may be powered on or off as required under the control of the comprehensive control system 107 to effectively control the humidity in the incubator 1.

In an embodiment according to the present disclosure, the incubator 1 may also be configured to automatically subject the biological samples to low-temperature sedimentation and enrichment. A refrigeration compressor may be provided in the incubator 1. The refrigeration compressor is configured to control the temperature of the biological samples between 2∼8°C when the biological sample needs to be sedimented and enriched, so as to realize the low-temperature sedimentation of the biological samples.

In an embodiment according to the present disclosure, the incubator 1 may also be configured to control the concentration of CO₂ in the incubator. For this purpose, the incubator 1 may be provided with a CO₂ pipe for supplementing CO₂ to the incubator, and a CO₂ sensor for measuring the concentration of CO₂ in the incubator 1. In particular, the incubator 1 may also be provided with a CO₂ inflation valve for controlling the replenishment of CO₂, and a CO₂ pipe filter for removing impurities in CO₂. During control, the comprehensive control system 107 may detect the concentration of CO₂ in the incubator 1 once every second by means of the CO₂ sensor. When the concentration of CO₂ in the incubator 1 is lower than a predetermined concentration range, the comprehensive control system 107 can calculate the opening time of the CO₂ inflation valve, and open the CO₂ inflation valve according to the calculated opening time to replenish CO₂ into the incubator 1. In an embodiment according to the present disclosure, the concentration of CO₂ in the incubator 1 is controlled between 0 and 10%.

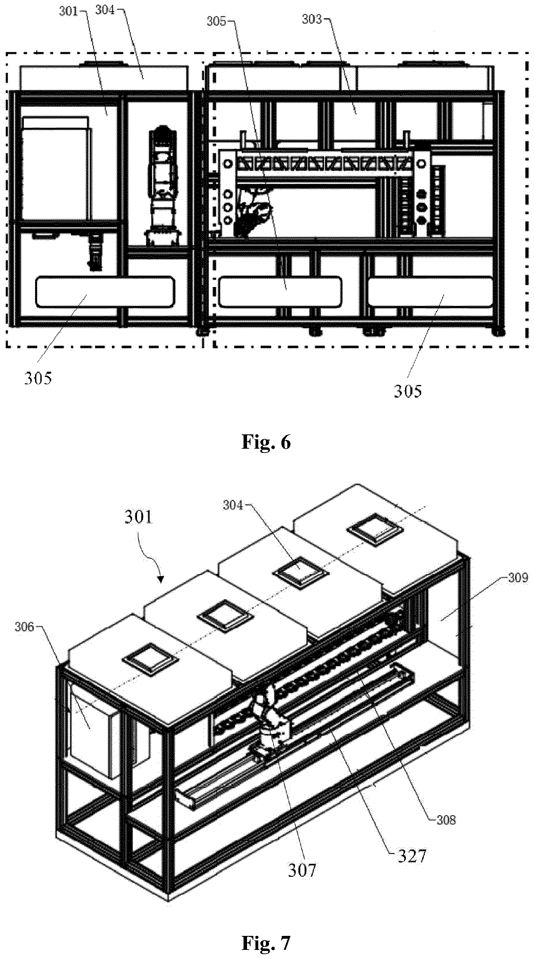

Referring to Figs. 5 to 21, the specific structure of the liquid operation system 3 according to an embodiment of the present disclosure is shown. The liquid operation system 3 may include a storage compartment 301, a central operation compartment 302, and at least one liquid operation compartment 303. In an embodiment according to the present disclosure, the liquid operation system 3 may be a full-automatic liquid operation system. The liquid operation system 3 may be arranged, as a whole, in a controlled laminar flow environment, which allows an internal environment of the liquid operation system 3 to be effectively isolated from its external environment (for example, a laboratory environment in which the liquid operation system 3 is arranged). For example, as shown in Fig. 6, the liquid operation system 3 may be provided with a laminar flow unit 304. In an embodiment according to the present disclosure, the laminar flow unit 304 may be configured to form a laminar flow environment inside the liquid operation system 3 with a pressure difference. The laminar flow unit 304 may include a laminar air-supply unit. The laminar air-supply unit may be arranged on the top of the liquid operation system 3. The laminar air-supply unit may include an air-supply device, such as a blower or a centrifugal fan, which can send gases from an environment or a dedicated gas source into the interior of the liquid operation system 3 in the form of laminar flow. The laminar flow unit 304 may further include a laminar air-return unit 305. The laminar air-return unit 305 may be arranged at the bottom of the liquid operation system 3. The laminar air-return unit 305 can subject the laminar gases in the liquid operation system 3 to circulating filtration and send them back to the inside of the liquid operation system 3, thus effectively guaranteeing the safety of personnel, samples and the surrounding environment during operation. For this purpose, the laminar air-return unit 305 may include a filter screen, which can filter out particulate matters existing in the laminar gases.

Next, the storage compartment 301 of the liquid operation system 3 will be described in detail first.

The storage compartment 301 may also be referred to as a loading and unloading compartment. The storage compartment 301 can store therein consumables (e.g., shake flasks, shake tubes, orifice plates, etc.) in a large scale to support continuous operation of the system 10. The storage compartment 301 can also temporarily store biological samples for refrigerated incubation during the operation of the liquid operation system 3.

Referring to Figs. 7, 8a and 10, the storage compartment 301 may include a consumable loading channel 309. Consumables can be loaded into the storage compartment 301 for storage and unloaded from the storage compartment 301 for use through the consumable loading channel 309.

As shown more clearly in Fig. 7, in an embodiment according to the present disclosure, in the consumable loading channel 309 is provided a robot transfer unit 307 which may include a transfer robot. The transfer robot may be placed on a slide rail 327. The slide rail 327 may extend along the consumable loading channel 309, and the transfer robot can slide on the slide rail along the extending direction of the slide rail 331 to fulfill loading and unloading of the consumables.

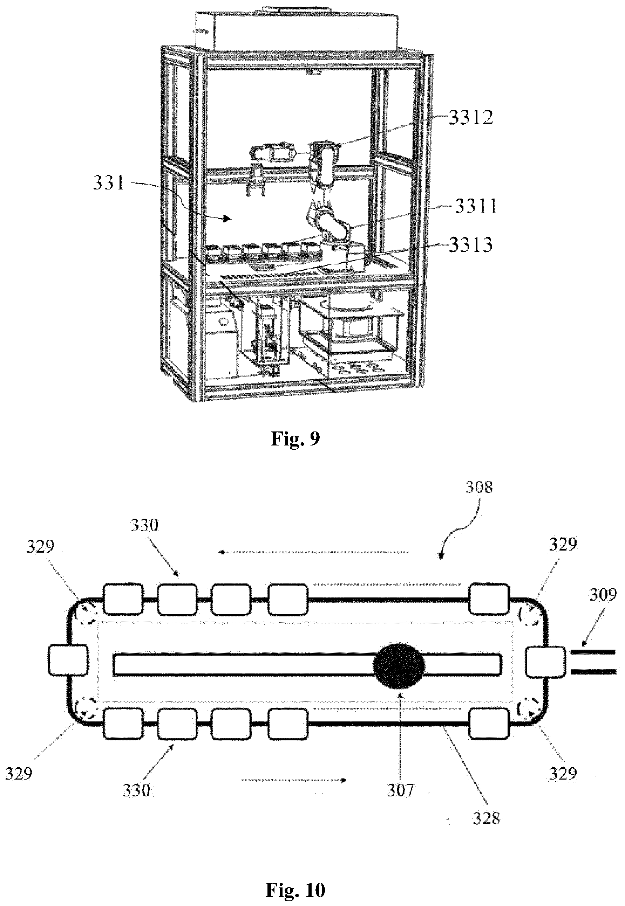

A continuous loading unit 308 may be provided in the vicinity of the consumable loading channel 309. As shown in Fig. 10, in an embodiment according to the present disclosure, the continuous loading unit 308 may be configured in the form of a continuous loading turntable. The continuous loading turntable may include an endless transmission element 328, such as a drive belt and the like. The transmission element 328 may be driven by a plurality of transmission servomechanisms 329 to rotate. In the embodiment shown in Fig. 10, the endless transmission element 328 may have a substantially rectangular shape, and may be driven by four transmission servomechanisms 329, each of which may be arranged at a corner of the rectangle. A plurality of consumable transfer trays 330 for carrying consumables may be provided on the transmission element 328. The plurality of consumable transfer trays 330 may be configured to rotate with the rotation of the transmission element 328. The transfer robot may be configured to transfer consumables from the consumable loading channel 309 to the consumable transfer tray 330 for storage, or transfer consumables from the consumable transfer tray 330 to the consumable loading channel 309 for use.

In an embodiment according to the present disclosure, the continuous loading turntable may be configured to be kept in continuous movement. In this way, continuous loading can be ensured without causing congestion of the consumable loading channel. Meanwhile, the transfer robot can also be constructed to keep working at full load, thus greatly improving the transfer efficiency and throughput. With the help of the transfer robot and the continuous loading turntable according to the present disclosure, it is also possible to realize continuous transfer of materials from the storage compartment 301 to the central operation compartment 302, thereby greatly improving the transfer efficiency and throughput from the storage compartment to the central operation compartment, which will be described in detail below.

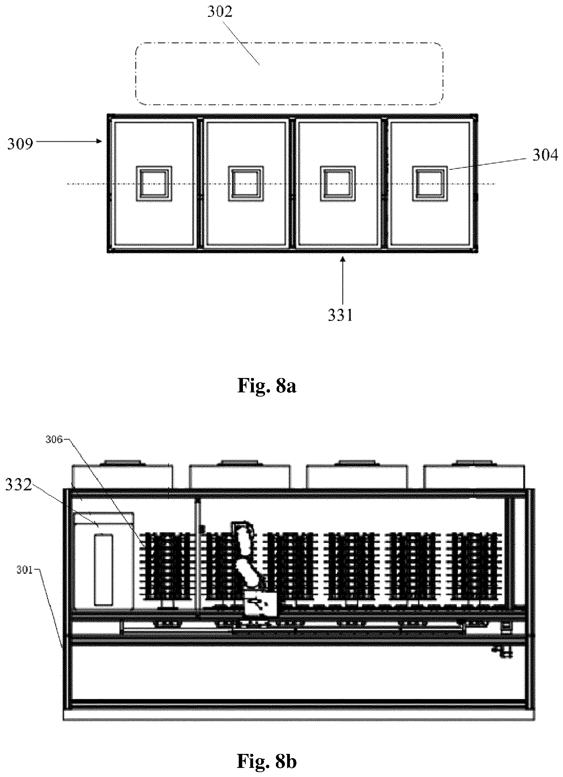

Referring to Fig. 8b, in an embodiment according to the present disclosure, the storage compartment 301 may be provided therein with a plurality of storage drums 306 for storing consumables and/or a refrigerated incubation unit 332 for refrigerated incubation of biological samples. The refrigerated incubation unit 332 can store storage drums containing biological samples, so as to perform refrigerated incubation of the biological samples. The plurality of storage drums 306 may be distributed in a storage drum array according to process requirements to realize parallel storage of various types of consumables. Each storage drum 306 may include a plurality of spaces for accommodating consumables, and the plurality of spaces may be arranged in a plurality of layers and a plurality of columns. The system 10 can number each storage drum 306 in the plurality of storage drums 306 and can number the layer and column of the spaces in each storage drum 306 for accommodating the consumables, so that the transfer robot can accurately transfer consumables to the corresponding space in the corresponding storage drum for storage. In the case where the storage compartment 301 is provided with a plurality of storage drums 306, by means of the transfer robot in the storage compartment 301, consumables on the consumable transfer tray 330 can be transferred to the corresponding storage drums 306, or the consumables in the corresponding storage drums 306 can be transferred to the consumable transfer tray 330 for unloading.

Returning to Fig. 8a and Fig. 9, in an embodiment according to the present disclosure, the storage compartment 301 may further include a sample loading channel 331. The sample loading channel 331 may be configured independently of the consumable loading channel 309. For example, as shown in Fig. 8a, the sample loading channel 331 may extend toward the central operation compartment 302 in a direction perpendicular to the extending direction of the consumable loading channel 309. As shown in Fig. 9, the sample loading channel 331 may include a loading unit 3311 and a transfer robot 3312 for loading. The transfer robot 3312 may be disposed on a slide rail 3313 and slide on the slide rail along the extension direction of the slide rail. In other embodiments according to the present disclosure, the sample loading channel 331 may have the same arrangement as the consumable loading channel 309. By providing the consumable loading channel 309 and the sample loading channel 331, which are independent of each other, in the storage compartment 301, following advantageous may be achieved: 1) consumables and biological samples can be loaded in parallel, thus realizing high-throughput loading; 2) with the consumable loading channel and the sample loading channel being independently arranged, operators can perform complicated operations in each independent area; and 3) with the consumable loading channel and the sample loading channel being independently arranged, the risk of polluting some disposable consumables in the loading process of the biological samples can be avoided.

In an embodiment according to the present disclosure, the storage drums 306 and the refrigerated incubation unit 332 of the storage compartment 301 may be disposed adjacent to the central operation compartment 302 and the liquid operation compartment 303. In this way, when the central operation compartment 302 and/or the liquid operation compartment 303 requires for replenishment of materials (the consumables or the biological samples), the materials to be replenished can be easily transferred to a transfer location in the central operation compartment 302 and/or the liquid operation compartment 303. For example, when the central operation compartment 302 and/or the liquid operation compartment 303 need(s) to be replenished with consumables, the system 10 can automatically specify the storage location of the required consumables in the storage compartment 301, and transfer the required consumables to the transfer location in the central operation compartment 302 and/or the liquid operation compartment 303 by means of the transfer robot in the storage compartment 301. Alternatively, the operator may place the biological samples to be replenished in the storage drum 306, and when the system 10 is scheduled to need liquid operation, the transfer robot may transfer the required biological samples to the transfer location in the central operation compartment 302 and/or the liquid operation compartment 303. Further, at the end of the liquid operation, the transfer robot in the storage compartment 301 may also transfer the biological samples that have been operated to a designated location in the storage drum for unloading.

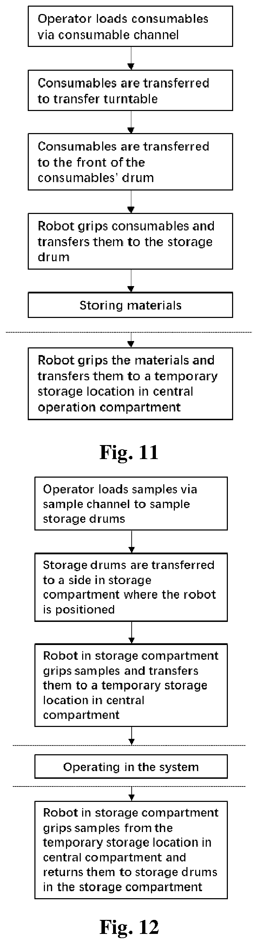

Figs. 11 and 12 show transfer flow charts of consumables and biological samples in the storage compartment 301, respectively.

With reference to Fig. 11, the transfer process of consumables in the storage compartment 301 will be described. First, an operator loads consumables through the consumable loading channel 309; then, the consumables are transferred onto the consumable transfer tray 330 of the continuous loading turntable by the transfer robot; the consumable transfer tray 330 follows movement of the transmission element 328 of the continuous loading turntable, and thus moves the consumables to the front of the storage drum 306 in the storage compartment 301; at this time, the transfer robot grips the consumables on the consumable transfer tray 330 and transfers them to the corresponding storage location in the storage drum 306, thus completing the storage of the consumables. After storage of the consumables, the transfer robot can also transfer the consumables in the corresponding storage drum 306 to a temporary storage location in the central operation compartment 302 for temporary storage when necessary.

With reference to Fig. 12, the transfer process of samples in the storage compartment 301 will be described. When there is a need for replenishment of biological samples, the operator loads the biological samples through the sample loading channel 331 and stores them in the corresponding sample storage drums; then, the storage drums having the biological samples stored are transferred to a side in the storage compartment 301 that the transfer robot is positioned; the transfer robot in the storage compartment 301 grips consumables storing the biological samples in the storage drums, and transfers the biological samples to the temporary storage location in the central operation compartment 302 for temporary storage. When the biological samples are temporarily stored in the central operation compartment 302, the system 10 can perform corresponding operations on the biological samples. After having been subjected to corresponding operations, the biological samples can be taken out of the temporary storage location of the central operation compartment 302 via the transfer robot in the storage compartment 301, and then returned to designated storage drums in the storage compartment 301 for unloading.

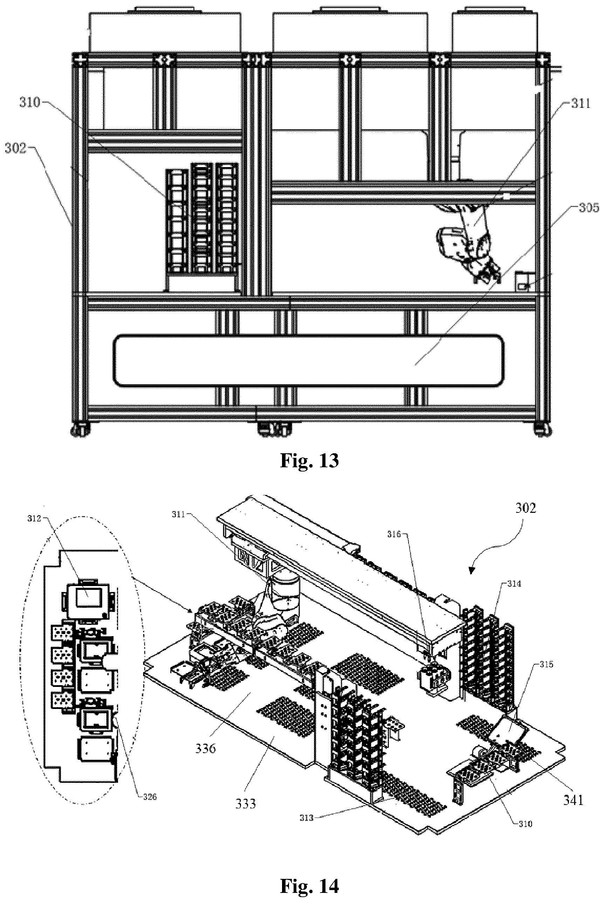

Next, referring to Figs. 13 to 15, the central operation compartment 302 according to an embodiment of the present disclosure will be described in detail.

In an embodiment according to the present disclosure, the central operation compartment 302 is configured to be able to perform a series of corresponding operations on a compartment table-board of the central operation compartment 302 while the consumables and the biological samples are being transferred between various compartments. The operations include but are not limited to: vacuum negative-pressure adsorption (vacuum filtration) operation during separation, sorting and purification of the samples; harvesting operations such as centrifugal separation, centrifugal enrichment and the like; vibration mixing operation; consumable (e.g. shake flasks, shake tubes, etc.) lid opening/closing operation; metal bath incubation operation; fluorescence quantitative PCR analyzer operation; and so on. In addition, the central operation compartment 302 may also be used for secondary temporary storage of materials during the high-speed operation of the liquid operation compartment 303.

With specific reference to Figs. 13 and 14, in an embodiment according to the present disclosure, the central operation compartment 302 may include a compartment table-board 333. The compartment table-board 333 may be mounted with devices for implementing predetermined operations, to accomplish pretreatment of the biological samples prior to entering the liquid operation compartment 303. As shown in Fig. 14, in order to accomplish predetermined operations on the compartment table-board 333, the devices mounted on the compartment table-board 333 may include but are not limited to: an consumable (such as shake flasks, shake tubes, etc.) lid opening/closing unit 316 for implementing lid opening/closing operation on consumables; a centrifuge unit 341 (e.g., an automatic temperature control centrifuge unit) which is used for implementing centrifugal separation, centrifugal enrichment and other operations on biological samples, and which may include an automatic centrifuge door-turnover mechanism 315, a centrifuge operation temporary rack 310 and the like; a vacuum filtration unit 312 for implementing vacuum negative-pressure adsorption operation during the separation, sorting and purification of the samples; a metal bath unit 326 for implementing metal bath incubation operation of the biological samples; a sample oscillation unit for implementing, for example, an oscillation shaking operation of the biological samples for a long time; a consumable storage rack and/or a secondary storage carrier 314 for temporarily or secondarily storing materials such as consumables. In an embodiment according to the present disclosure, the compartment table-board 333 may further provided thereon with a laminar air-return mesh plate 313 to allow the laminar returned-air from the laminar air-return unit 305 to enter the internal space of the central operation compartment 302 via the laminar air-return mesh plate 313. The laminar air-return mesh plate 313 can filter the laminar returned-air entering the internal space of the central operation compartment 302 to remove particles therein.

In an embodiment according to the present disclosure, in order to realize automatic transfer and operation of consumables and biological samples in the central operation compartment 302, a multi-degree-of-freedom robot 311 may also be provided on the compartment table-board 333 of the central operation compartment 302. The multi-degree-of-freedom robot 311 can move with multiple degrees of freedom (for example, horizontal movement, vertical movement, rotation around its own central axis, deflection around horizontal and vertical axes, etc.). In the embodiment shown in Figs. 13 and 14, the multi-degree-of-freedom robot 311 may be mounted on a linear motor module 334. The linear motor module 334 may include a cross beam 335 extending in a horizontal direction, and a linear motor mounted on the cross beam 335 and driving the multi-degree-of-freedom robot 311 along the extending direction of the cross beam 335. In this way, the multi-degree-of-freedom robot 311 can move within a predetermined range in the central operation compartment 302, thereby facilitating automatic transfer of the consumables and the biological samples within the predetermined range. By providing the multi-degree-of-freedom robot 311, the intelligence and automation of the system 10 according to the present disclosure can be enhanced.

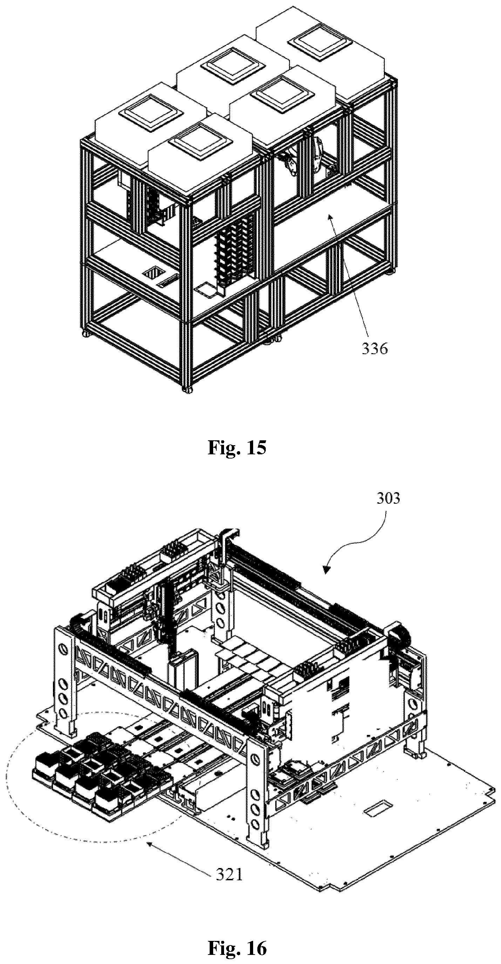

In an embodiment according to the present disclosure, in order to enable better docking of the central operation compartment 302 with the liquid operation compartment 303, a space 336 may be reserved in the middle of the operation table-board of the central operation compartment 302 (see Figs. 14 and 15). The space 336 is configured to receive the consumable stage sliding table 321 of the liquid operation compartment 303 when the consumable stage sliding table 321 slides out (see Fig. 16), thereby facilitating the loading and removal of the consumables on the consumable stage sliding table of the liquid operation compartment 303. This ensures the automatic operation process of the system 10 according to the present disclosure and improves the efficiency of transfer between the central operation compartment 302 and the liquid operation compartment 303.

Next, referring to Figs. 5 and 16 to 20, the liquid operation compartment 303 according to an embodiment of the present disclosure will be described in detail.

In an embodiment according to the present disclosure, the liquid operation compartment 303 is used to perform various operations on the biological samples prior to testing, including but not limited to: plasmid preparation and frozen tube lid opening/closing operation; culture and replenishment of the biological samples; transfection expression of the biological samples; magnetic bead sorting; magnetic bead purification; pretreatment of the biological samples to be detected; and so on. In other embodiments according to the present disclosure, the liquid operation compartment 303 may also be used to perform at least one of following operations: purifying the head of a pipetting gun; filler screening; protein exchange; harvesting and enrichment.

In an embodiment according to the present disclosure, the system 10 may include two liquid operation compartments 303#1 and 303#2. The two liquid operation compartments 303#1 and 303#2 may have same arrangements and configurations, so as to be able to possess exactly same functions. As shown in Fig. 5, the two liquid operation compartments 303#1 and 303#2 may be arranged at two sides of the central operation compartment 302 respectively. In this embodiment, the two liquid operation compartments 303#1 and 303#2 may be arranged in mirror images with respect to the central operation compartment 302. The two liquid operation compartments 303#1 and 303#2 may be configured to operate not only independently of each other, but also in parallel. The arrangement of two such liquid operation compartments is advantageous in that: 1) parallel operation of samples in different processes and different specification requirements can be realized, which provides process adaptability; 2) The throughput of the system 10 according to the present disclosure can be improved by order of magnitude; 3) due to the arrangement of two liquid operation compartments, a redundant design is present for some key operations in the system 10, which makes it possible to use the other liquid operation compartment to perform the corresponding key operations when either of the two liquid operation compartments 303#1 and 303#2 fails, thus avoiding the downtime of the whole system 10 and ensuring the high reliability of the automatic operation of the whole system 10.

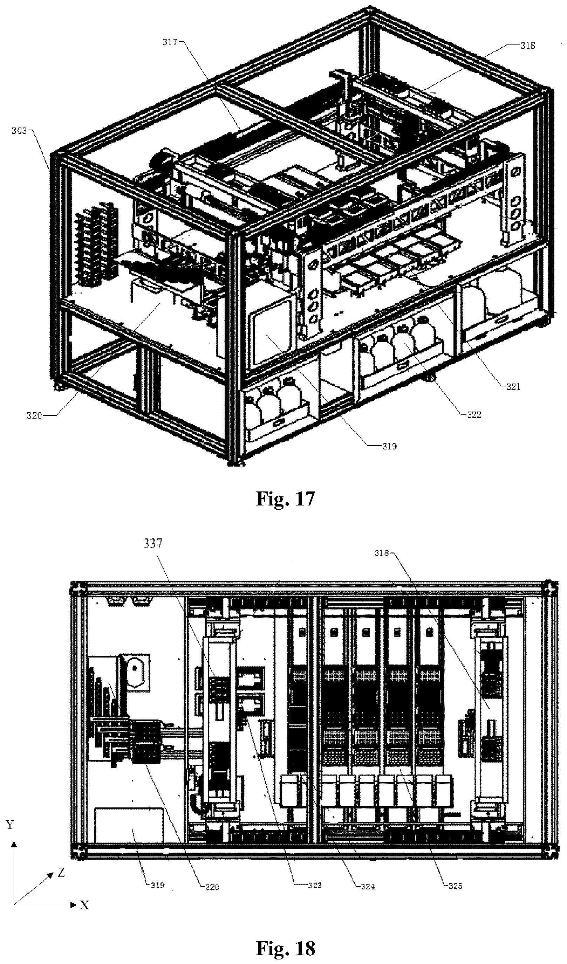

Referring to Figs. 17 and 18, in an embodiment according to the present disclosure, the liquid operation compartment 303 may include at least one pipetting unit 318, for example, one, two or more pipetting units. The pipetting unit 318 is configured to transfer the liquid required in the process to perform corresponding operations. The pipetting unit 318 may be configured to be movable along an X axis. Each pipetting unit 318 may include one or more pipetting heads 337, for example, one, two, four or more pipetting heads. Each pipetting head 337 can move independently along a Y axis and a Z axis in the pipetting unit 318, wherein the Y axis is in a horizontal plane and perpendicular to the X axis, and the Z axis is in a vertical plane and perpendicular to the X axis and the Y axis. For example, the pipetting unit 318 may include one or more movers mounted along the Y-axis direction, so that each pipetting head 337 can be driven by the movers to move along the Y-axis direction. In addition, the pipetting unit 318 may further include a Z-axis driving mechanism to drive each pipetting head 337 to move along the Z-axis.

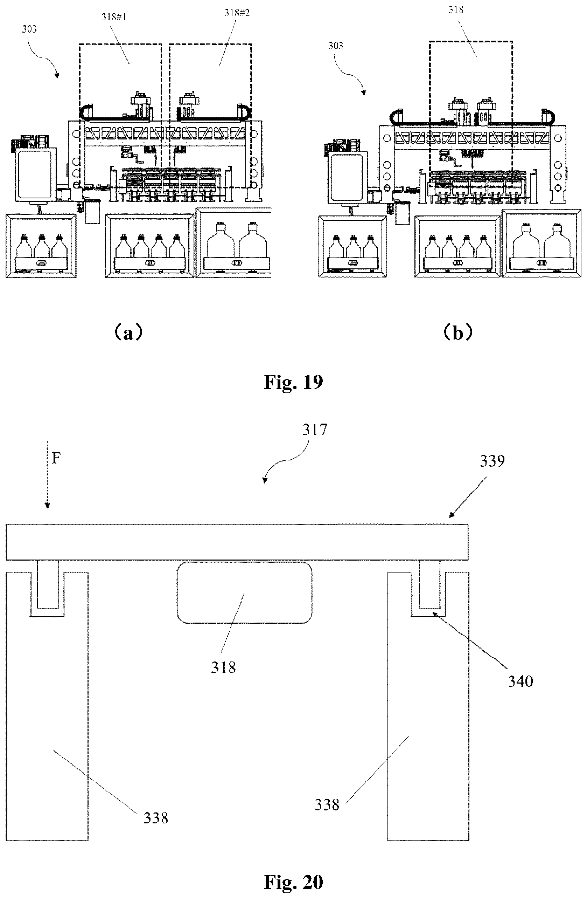

The pipetting unit 318 may be mounted on a linear motor gantry main frame structure 317. The linear motor gantry main frame structure 317 may include a guide rail structure as well as double-sided linear motors or a single-sided linear motor, so as to make the pipetting unit 318 movable along the X axis. Fig. 20 shows the specific composition of the linear motor gantry main frame structure 317. As shown in Fig. 20, the linear motor gantry main frame structure 317 may include two guide rail structures 338 spaced from each other and a cross beam 339 extending between the two guide rail structures 338. The guide rail structures 338 may extend along the X-axis, while the cross beam 339 may extend along the Y-axis. The cross beam 339 is movable in the X-axis direction along the guide rail structures 338. The pipetting unit 318 may be disposed on the cross beam 339 to move along the X axis together with the cross beam 339.

In an embodiment according to the present disclosure, the guide rail structures 338 and the cross beam 339 may be components of a linear motor, wherein the guide rail structures 338 may constitute a stator of the linear motor and the cross beam 339 may constitute a mover of the linear motor. With this configuration, the guide rail structures 338 and the cross beam 339 of the linear motor gantry main frame structure 317 can be connected in a nonmechanical manner. In other words, as shown in Fig. 20, a gas gap 340 (the gas gap 340 may be maintained at millimeter level) is present between the guide rail structures 338 and the cross beam 339 in the working process due to the action of electromagnetic force. This eliminates the mechanical friction between the guide rail structures 338 and the cross beam 339 as well as the dust pollution brought by mechanical friction, and also gets rid of the requirement for grease lubrication by conventional servo mechanisms and the pollution caused by grease volatilization. On the other hand, since there is no mechanical connection between the guide rail structures 338 and the cross beam 339, the pipetting unit 318 can be easily added, reduced, replaced or repaired on the linear motor gantry main frame structure 317. For example, when there is a need to add pipetting units 318 to the linear motor gantry main frame structure 317, one or more pipetting units 318 may be conveniently mounted from above the cross beam 339 in a direction F shown in Fig. 20, and come into use after connection with corresponding electrical cables. When the pipetting units 318 need to be reduced, replaced or repaired, the pipetting unit 318 may be conveniently removed from above the cross beam 339 of the linear motor gantry main frame structure 317 in a direction opposite to the direction F after the electrical connection is disconnected.

In an embodiment according to the present disclosure, the liquid operation compartment 303 may include a unit for pumping and replenishing liquid 320 and a pump set 319. The unit for pumping and replenishing liquid 320 is configured to pump the required process fluid into liquid storage tanks in the liquid operation compartment 303, and transfer the process fluid to the pipetting unit 318 by a robot (for example, an orifice plate robot). The pump set 319 may be equipped with a multi-channel peristaltic pump or other types of pumps for pumping the liquid in a bottom-compartment liquid storage unit 322 into pipes of units (such as the unit for pumping and replenishing liquid 320) provided on the working table-board. In an embodiment according to the present disclosure, the bottom-compartment liquid storage unit 322 is configured to store process fluids such as culture medium, lysate and the like and monitor the weight of these process fluids. After the liquid pumping operation, the pipe may be subjected to full-automatic cleaning and closing operation, for example, with sterilized liquid.

As mentioned above, the pipetting unit 318 is configured to transfer the liquid required in the process to consumables (such as orifice plates) to perform corresponding operations. For this purpose, the liquid operation compartment 303 may also include a corresponding operation area. In an embodiment according to the present disclosure, the liquid operation compartment 303 may include one or more of a consumable stage sliding table 321, an oscillation unit 323, a consumable carrier 324, and an operation stage 325. The operation stage 325 is configured to perform corresponding operations on materials and can realize attitude adjustment and temporary storage of the materials during the process. The operation stage 325 may be arranged on the consumable stage sliding table 321. The consumable stage sliding table 321 can slide out of and into the liquid operation compartment 303 in a controlled manner, such that consumables such as orifice plates, shake tubes and shake flasks can be loaded or unloaded onto or from the operation stage 325. As shown in Figs. 14 and 16, when the consumable stage sliding table 321 slides out of the liquid operation compartment 303, it can be received in space 336 of the central operation compartment 302, so as to facilitate the loading and removal of the consumables. The oscillation element 323 is configured to perform mixing operation on the consumables such as orifice plates, shake tubes and shake flasks in the process, while the consumable carrier 324 is configured to carry different types of the consumables, such as orifice plates, shake tubes, shake flasks and the like.

In an embodiment according to the present disclosure, the liquid operation compartment 303 may include two or more pipetting units 318, which enables the liquid operation compartment 303 to improve the utilization efficiency of the system through real-time resource optimization. Specifically, when a small number of consumables (e.g., 6-well plate, 8-well plate, 24-well plate, or shake flask) are to be operated, the two or more pipetting units in the liquid operation compartment can operate independently or in parallel in two or more independent operation areas. For example, as shown in Fig. 19 (a), the two pipetting units 318 in the liquid operation compartment 303 can operate independently or in parallel in two independent operation areas 318#1 and 318#2. When the two or more pipetting units operate in parallel in their respective operation areas, the operation efficiency can be improved by order of magnitude. When a large number of consumables are to be operated (for example, 96-well plate, 384-well plate, etc.), the two or more pipetting units may be integrated together (for example, they may be integrated into a 8-channel pipetting unit) for integral operation, thereby realizing high-throughput operation. For example, as shown in Fig. 19 (b), the two pipetting units 318 are integrated into an integral 8-channel pipetting unit to perform integral operation.

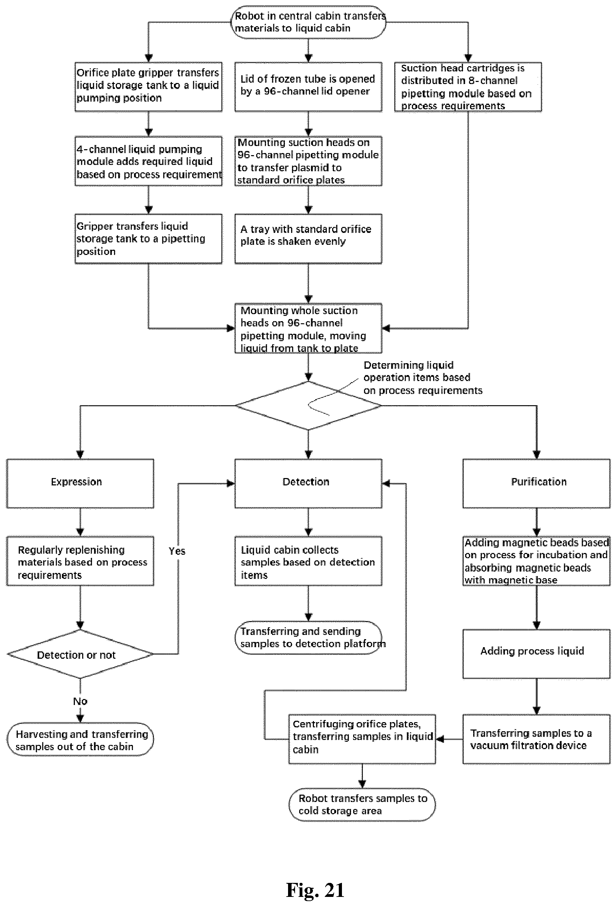

Referring to Fig. 21, the specific workflow of the liquid operation compartment 303 according to an embodiment of the present disclosure is shown. First, the transfer robot in the central operation compartment 302 transfers the materials to the liquid operation compartment 303, and then multi-route operations may be carried out in the liquid operation compartment 303. In a first route, the liquid storage tank can first be transferred to a liquid pumping position by a transfer tool (for example, an orifice plate gripper); then, the unit for pumping and replenishing liquid 320 (for example, a 4-channel liquid pumping module) adds the required liquid into the liquid storage tank according to process requirements; then the transfer tool (e.g., a gripper) transfers the liquid storage tank to a pipetting position. In a second route, the lid of a frozen tube may first be opened by using a lid opener (such as a 96-channel lid opener); then, the pipetting unit (for example, a 96-channel pipetting module) is mounted with a suction head, by means of which the plasmid in the frozen tube is transferred to a standard orifice plate; finally, a tray loaded with the standard orifice plate is shaken evenly in the oscillation unit 323. In a third route, suction head cartridges may be distributed in the pipetting unit (for example, the 8-channel pipetting module) in advance according to process requirements, so that the pre-distributed suction heads can be mounted as an entirety in the subsequent pipetting module with required channels. Operations in the above three routes can be carried out simultaneously to improve work efficiency. Of course, the present disclosure is not limited to this, and operations in the above three routes may be carried out in sequence in a predetermined order. After the operations in the above three routes are completed, the pre-distributed suction heads may be installed as an entirety on the pipetting unit (for example, a 96-channel pipetting module), and then the liquid in the liquid storage tank can be transferred to the required orifice plate by means of the suction heads. After the liquid in the liquid storage tank has been transferred to the required orifice plate, items of liquid operation can be determined according to the process requirements. When expression is required, replenishment of materials may be carried out regularly according to process requirements. After completion of the expression, it is judged whether detection is required, and if so, the liquid operation compartment collects samples according to detection items, and then transfers the samples out of the compartment and sends them to the sample detection platform 5; or otherwise the expressed biological samples can be directly harvested and transferred out of the compartment. When purification is required, magnetic beads may be added according to process requirements for incubation, and a magnetic base may be used to adsorb the magnetic beads, and process liquid may be added as required during the incubation process. After the incubation is completed, the biological samples are transferred to a vacuum filtration device to be filtered, then the orifice plate is subjected to centrifuged operation for collection of biological samples, and the collected biological samples are transferred with the pipetting unit. When the purified biological samples need to be detected, the liquid operation compartment collects samples according to detection items, and then transfers the samples out of the liquid operation compartment and sends them to the sample detection platform 5; and if detection is not required, the purified biological samples may be directly transferred to a cold storage area by robots (for example, mechanical arms).

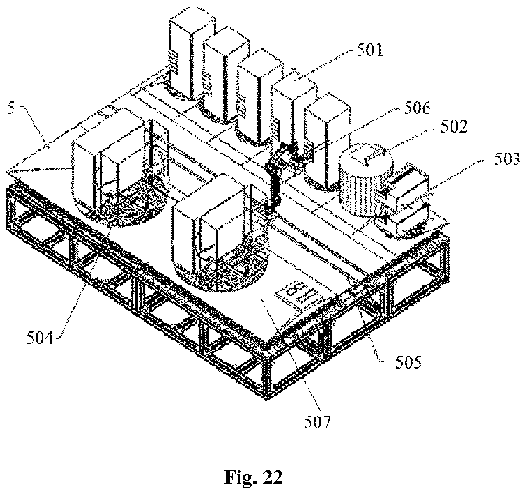

Next, referring to Fig. 22, the sample detection platform 5 according to an embodiment of the present disclosure is shown. In an embodiment according to the present disclosure, the sample detection platform 5 may be a full-automatic sample detection platform. The sample detection platform 5 is configured to perform various detections on biological samples, including but not limited to: chromatographic sample preparation, HPLC (high performance liquid chromatography) detection, mass spectrometry detection, capillary electrophoresis or gel electrophoresis detection, ELISA analyzer detection, endotoxin detection, and the like.

As shown in Fig. 22, in an embodiment according to the present disclosure, the sample detection platform 5 may be provided with: a high performance liquid chromatograph 501 to perform HPLC detection; a mass spectrometer 504 to perform mass spectrometry detection; a ELISA analyzer 503 to perform ELISA analyzer detection; and a capillary electrophoresis apparatus or gel electrophoresis apparatus 502 to perform capillary electrophoresis or gel electrophoresis detection. In an embodiment according to the present disclosure, the sample detection platform 5 may be provided with a plurality of high-performance liquid chromatographs 501, a plurality of mass spectrometers 504, a plurality of ELISA analyzers 503, and a plurality of capillary electrophoresis apparatuses or gel electrophoresis apparatuses 502. The plurality of high-performance liquid chromatographs 501, the plurality of mass spectrometers 504, the plurality of ELISA analyzers 503, and the plurality of capillary electrophoresis apparatuses or gel electrophoresis apparatuses 502 can form an HPLC array, a mass spectrometer array, an ELISA analyzer array, and a capillary electrophoresis apparatus or gel electrophoresis apparatus array respectively, thereby enabling the sample detection platform 5 to fulfill the preparation and detection of biological samples in parallel and with high throughput.

In an embodiment according to the present disclosure, in order to transfer biological samples to be detected to different detection locations in the sample detection platform for detection, the sample detection platform 5 may include a robot 506. The robot 506 may be a human-machine cooperative robot. More specifically, the robot 506 may be a multi-degree-of-freedom (highly flexible) human-machine cooperative robot. In an embodiment according to the present disclosure, the robot 506 may include a force feedback unit configured to prevent the robot 506 from contacting detection devices (especially some high-precision detection devices) with a force exceeding a predetermined value, thereby to ensure the safety of the detection devices during operation. In an embodiment according to the present disclosure, the robot 506 may be disposed on a linear module 505. The linear module 505 may be constructed in the form of a linear guide rail, and the robot 506 can move along the linear module 505, so as to transport biological samples to different detection locations for detection in a larger range.

In an embodiment according to the present disclosure, a sufficient space 507 is reserved on the table-board of the sample detection platform 5 for expanding the sample detection platform 5 by mounting more devices thereon. For example, other detection devices, such as an endotoxin detector, a counter, an imager, a realtime fluorescence quantitative PCR (QPCR) analyzer, BRA, etc., may be further integrated on the sample detection platform 5 as required. This enables the sample detection platform 5 according to the present disclosure to be more flexible in layout.

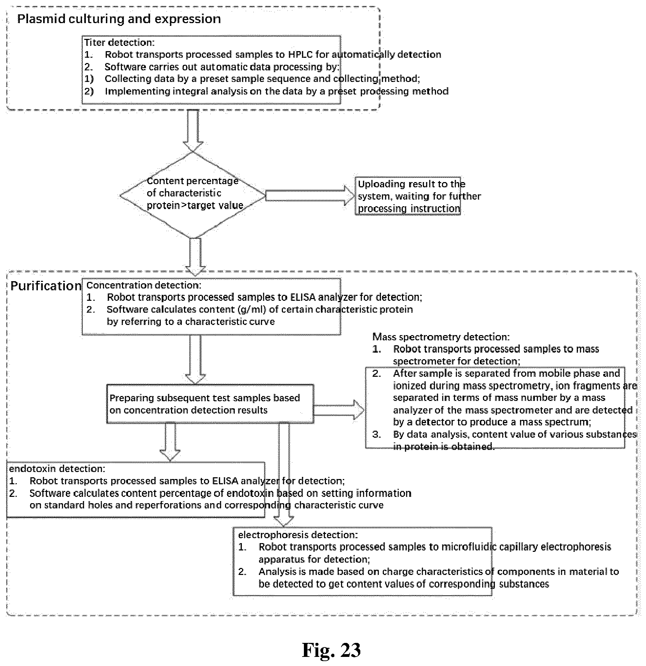

Fig. 23 shows an operation flow of detection by using the sample detection platform 5 according to the present disclosure. After biological samples have been subjected to plasmid culturing and expression, Titer or protein concentration detection (Titer detection) may be carried out first. The specific process is as follows: the robot (also called manipulator) transports the processed biological samples to the high performance liquid chromatograph 501 for HPLC detection; the software carries out automatic data processing by following processes: 1) collecting data by a preset sample sequence and collection method; and 2) implementing integral analysis on the data by a preset processing method. Then, it is followed by a step of determining whether the content percentage of characteristic protein in the biological samples is greater than a target value or not. If the content of the characteristic protein in the biological samples is less than the target value, the result is uploaded to the system, waiting for the further processing instruction from the system. If the content of the characteristic protein in the biological samples is greater than the target value, the concentration of the biological samples is detected. In the process of concentration detection, the robot (also called manipulator) transports the processed biological samples to the ELISA analyzer 503 to implement ELISA analyzer detection; and the software calculates the content (g/ml) of a certain characteristic protein by referring to a characteristic curve. Other detections on the biological samples may be carried out subsequently based on the result of concentration detection. The subsequent detections may include endotoxin detection, mass spectrometry detection, electrophoresis detection, etc.

In the process of endotoxin detection, the robot (also called manipulator) transports the processed biological samples to the ELISA analyzer 503 to implement ELISA analyzer detection; and the software calculates the content percentage of endotoxin according to the setting information on standard holes and reperforations and the corresponding characteristic curve.

In the process of mass spectrometry detection, the robot (also called manipulator) transports the processed biological samples to the mass spectrometer 504 to implement mass spectrometry detection; after the biological sample is separated from the mobile phase and ionized during mass spectrometry, the ion fragments are separated in terms of mass number by a mass analyzer of the mass spectrometer and are detected by a detector to produce a mass spectrum; then, by data analysis, the content of various substances in the protein can be obtained.

In the process of electrophoresis detection, the robot (also called manipulator) transports the processed biological samples to the microfluidic capillary electrophoresis apparatus or gel electrophoresis apparatus 502 to implement capillary electrophoresis or gel electrophoresis detection; and analysis is made according to the charge characteristics of the components in the material to be detected to get content values of corresponding substances.

During the daily operation, each detection device on the sample detection platform 5 needs addition of reagents such as cleaning solution and calibration solution, so a complex liquid replacement operation is required. In an embodiment according to the present disclosure, the sample detection platform 5 may include a detection device mounting turntable 401 not only for ensuring high-throughput operation of the robot, but also for ensuring the operator to perform daily replacement (e.g., liquid replacement) and/or maintenance (e.g., cleaning maintenance) on each detection device at high efficiency. The detection device mounting turntable 401 may include a rotary platform 404. The rotary platform 404 is provided with a plurality of device installation and positioning holes 405 for the installation of corresponding detection devices. The rotary platform 404 may be driven by a motor 402 via a drag chain 403 to rotate. When the detection device needs to have its liquid replaced and/or needs to be maintained, the rotary platform 404 may rotate 180 degrees such that the detection device is rotated from a side, where the operating surface of the detection device faces the robot, to a side where the operating surface faces the operator, so as to facilitate the operator to replace the liquid of the detection device and/or to maintain the detection device. After the liquid replacement and/or maintenance of the detection device is completed, the rotary platform 404 can, for example, rotate reversely by 180 degrees to rotate the operating surface of the detection device from the side facing the operator back to the side facing the robot, thereby to restart the detection operation. By use of the detection device mounting turntable 401, the operator can efficiently replace the liquid of the detection device and/or maintain the detection device when the detection device does not work in daily operation, and put the detection device back into use after liquid replacement and/or maintenance, thus generally realizing uninterrupted operation of the detection device.

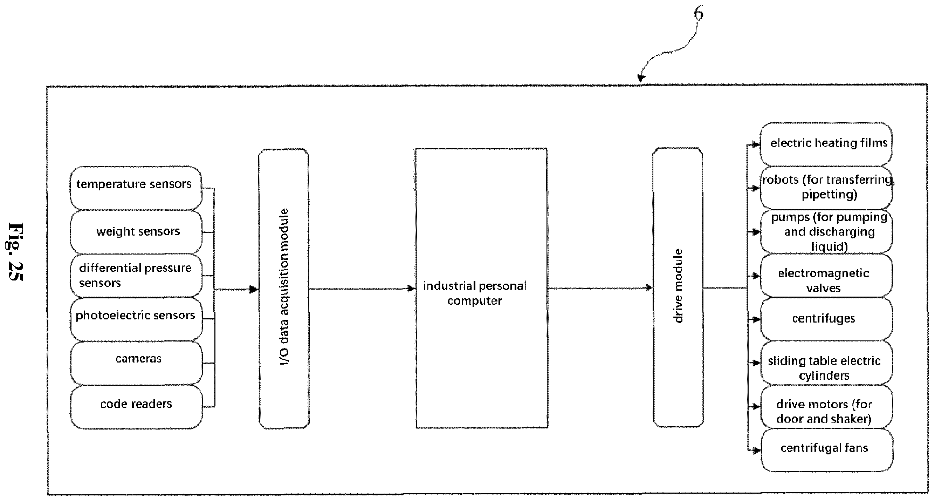

As mentioned above, in the embodiment according to the present disclosure, the system 10 may be constructed as an automatic and intelligent system, and the operation of at least one module or all the modules (e.g., the incubator, the liquid operation system, the sample detection platform, the transfer platform, etc.) in the system 10 can be automatically accomplished under the control of an automatic control system. Fig. 25 shows the architecture of an automatic control system 6 according to an embodiment of the present disclosure. As shown in Fig. 25, the automatic control system 6 according to the present disclosure may include an industrial personal computer (IPC), an input/output data acquisition module, and a drive module. For data acquisition, various acquisition devices may be provided in the system 10, including but not limited to: temperature sensors, weight sensors, differential pressure sensors, photoelectric sensors, cameras, code readers, etc., wherein the temperature sensors, weight sensors, differential pressure sensors, photoelectric sensors, cameras and the like may be arranged at appropriate positions in the system 10 as required. The drive module is used to control the operation of various components or modules in the system 10, including but not limited to: electric heating films, robots (for transferring, pipetting, etc.), pumps (for pumping liquid, discharging liquid, etc.), electromagnetic valves, centrifuges, sliding table electric cylinders, drive motors (for example, drive motors for the door and shaker of the incubator), centrifugal fans, etc.

With the help of the automatic control system, the system according to the present disclosure can increase the throughput of expression, purification, and detection and screening by 1-3 orders of magnitude and reduce the number of personnel by 1-2 orders of magnitude by automating, standardizing and intelligentizing the whole process of expression, purification, and detection and screening of biological drugs. This not only greatly reduces the cost of personnel, but also significantly reduces the demand for venues and thus greatly reduces the cost of infrastructure constructions. In addition, through standardized operation, the system according to the present disclosure greatly improves the stability, uniformity and reproducibility of the process flow, and the system according to the present disclosure can be easily deployed in multiple places and scenes.

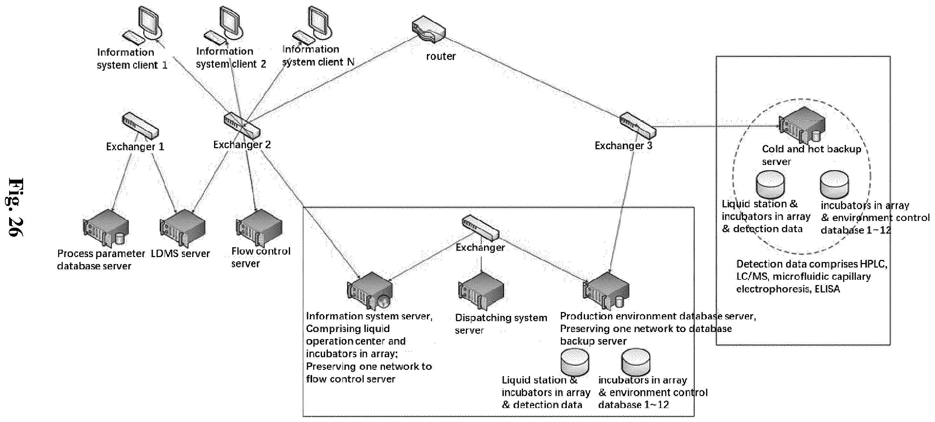

Fig. 26 shows an information system architecture according to an embodiment of the present disclosure. The system 10 according to the present disclosure adopts a multi-server structure, capable of guaranteeing the safety and reliability and high efficiency of different operations in parallel, and realizing the safe storage and backup of data.

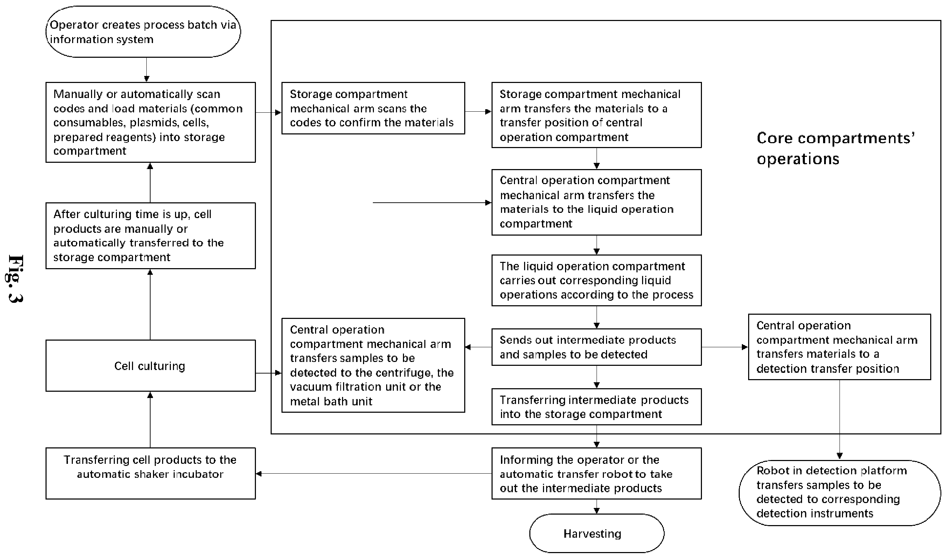

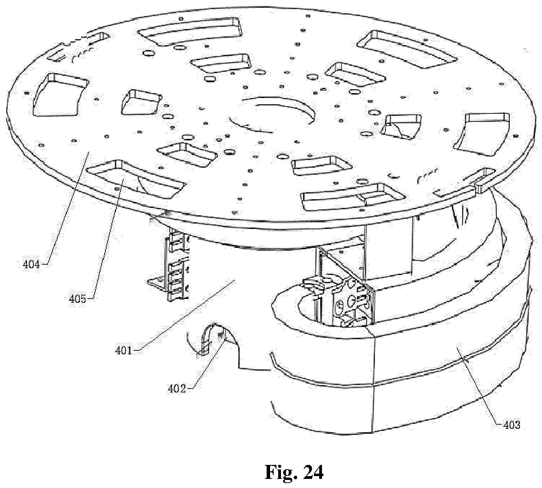

The specific structure and composition of the system 10 for expression, purification, and detection and screening of biological drugs according to the present disclosure have been described in detail above with reference to Figs. 1 to 26. Now, returning to Fig. 3, the entire operation flow of the system 10 according to the present disclosure will be described in detail. When the system 10 according to the present disclosure is used for expression, purification, and detection and screening of biological drugs, an operator can first create a process batch through the information system, and then manually or automatically scan codes of materials and load the materials (such as common consumables, plasmids, cells, prepared reagents, etc.) into the storage compartment 301 (i.e., loading or unloading compartment). After scanning codes to confirm the materials, the transfer robot (or mechanical arm) in the storage compartment 301 transfers the materials to a transfer location in the central operation compartment 302, and then the materials are transferred to the liquid operation compartment 303 through the robot (or mechanical arm) in the central operation compartment 302. The liquid operation compartment 303 carries out corresponding liquid operations according to the process, and then sends out intermediate products or biological samples to be detected to the central operation compartment 302.

If the intermediate products need to be detected, the robot in the central operation compartment 302 can transfer biological samples to be detected to a sample detection transfer platform 4, and the robots in the sample detection transfer platform 4 and the sample detection platform 5 can transfer the biological samples to be detected to the corresponding detection instruments for detection.

If there is no need to detect the intermediate products, the intermediate products may be treated in the following two routes: in a first route, the intermediate products are transferred to the central operation compartment 302, and the robot in the central operation compartment 302 transfers the intermediate products to the centrifuge, the vacuum filtration unit or the metal bath unit for corresponding operations, and sends the operated intermediate products back to the liquid operation compartment 303 for the next round of liquid operations. In a second route, the intermediate products are transferred to the storage compartment 301 and the operator or the transfer robot is informed to take out the intermediate products. If the intermediate products meet predetermined requirements for the biological samples, harvesting operation may be performed on the intermediate products. If the intermediate products do not meet the predetermined requirements for the biological samples and need to be cultured further, the intermediate products (for example, intermediate cell products) may be transferred to the incubator 1 for further cell culturing. After the culturing time is up, the intermediate products may be manually or automatically transferred to the storage compartment 301, and then the corresponding operation steps in the storage compartment 301, the central operation compartment 302, and the liquid operation compartment 303 are repeated.

As stated above, the system according to the present disclosure can improve the throughput of expression, purification, and detection and screening by 1-3 orders of magnitude and reduce the number of personnel by 1-2 orders of magnitude by automating, standardizing and intelligentizing the whole process of expression, purification, and detection and screening of biological drugs. This not only greatly reduces the cost of personnel, but also significantly reduces the demand for venues and thus greatly reduces the cost of infrastructure constructions. In addition, through standardized operation, the system according to the present disclosure greatly improves the stability, uniformity and reproducibility of the process flow, and the system according to the present disclosure can be easily deployed in multiple places and scenes. Furthermore, the system according to the present disclosure can also ensure the biological safety of personnel, samples and mounting environment in the operation process, and can efficiently realize data collection, storage, backtracking and comprehensive application in the whole process.

The system according to the present disclosure can be used not only for the automatic operation of the whole process of expression, purification, and detection and screening of biological drugs, but also for large-scale liquid operation and supporting detection operations such as gene detection, compound screening, high-throughput inspection and the like in similar applications such as research, development, assessment and evaluation of drugs. In addition, the number of the modules in the system according to the present disclosure and the number of the internal units of each module can also be adjusted as actually required (for example, the pipetting channel in each pipetting unit may be adjusted to be of 1-16 channel according to the process requirements. The number of the pipetting units may also be increased such that the total number of the channels reaches 96 or even 384), which enhances the applicability and layout flexibility of the system according to the present disclosure.

Other embodiments of the present disclosure will be disclosed below.

Referring to Figs. 1-26, the present disclosure provides a technical solution as following: an intelligent system for expression, purification, and detection and screening of biological drugs includes an intelligent incubator 1 and an automatic control system 6, wherein an upper right side of the intelligent incubator 1 is provided with a cultured material transfer platform 2, on the right of the cultured material transfer platform 2 is provided a full-automatic core liquid operation system 3, on the right of the full-automatic core liquid operation system 3 is provided a test sample transfer platform 4, and on the right of the test sample transfer platform 4 is provided a full-automatic detection platform 5.

Referring to Figs. 1-4, a device illumination/purification/disinfection unit 101 is arranged on the upper side within the intelligent incubator 1. A shaker mechanism driving unit 102 is arranged on the lower side within the intelligent incubator 1. A device frame unit 103 is arranged above the shaker mechanism driving unit 102 and inside the intelligent incubator 1. An automatic sliding table unit 104 is arranged on a lower side inside the device frame unit 103, and a shake flask loading assembly 105 is disposed on ab upper side of the automatic sliding table unit 104. An upper right side of the intelligent incubator 1 is provided with a device operation and display area 106. An intelligent comprehensive control system unit 107 is arranged on a right side within the intelligent incubator 1. A right side of the intelligent incubator 1 is provided with an automatic sealing door unit 108. The intelligent incubator 1 can realize full-automatic temperature-and-humidity-controlled culturing under a control of temperature between 25 - 38 °C and a control of humidity between 70∼95%; can realize full-automatic low-temperature sample sedimentation and enrichment under a control of temperature between 2∼8°C, so as to realize sample sedimentation; allows samples to slide in and out fully automatically for docking with the full-automatic robot transfer system; allows the incubator door to be opened and closed fully automatically for docking with the full-automatic robot transfer system; and allows the culture array to be remotely controlled by factory software via an intelligent network unit.

Referring to Figs. 1-21, the full-automatic core liquid operation system 3 includes a storage compartment 301, a central operation compartment 302 and full-automatic liquid operation compartments 303. The central operation compartment 302 is disposed behind the storage compartment 301, and the full-automatic liquid operation compartments 303 are disposed on the left and right sides of the central operation compartment 302. Upper sides of the storage compartment 301, the central operation compartment 302 and the full-automatic liquid operation compartments 303 are all provided with laminar flow units 304, and lower sides of the storage compartment 301, the central operation compartment 302 and the full-automatic liquid operation compartments 303 are all provided with laminar air-return units 305. Refrigerated incubation storage drums 306 are provided at a rear side within the storage compartment 301. A robot transfer unit 307 is provided at a front side within the storage compartment 301. A continuous loading unit 308 is arranged within the storage compartment 301 and within the robot transfer unit 307, and a consumable loading channel 309 is arranged on a right side of the storage compartment 301 corresponding to the continuous loading unit 308. A temporary storage stand 310 is arranged on a right side inside the central operation compartment 302. A robot module 311 is arranged at a left rear side within the central operation compartment 302. A vacuum filtration unit 312 and a metal bath unit 326 are arranged in front of the robot module 311 inside the central operation compartment 302. A laminar air-return mesh plate 313 is arranged at a right front side within the central operation compartment 302. A consumable storage rack 314 is arranged at a right rear side within the central operation compartment 302. An automatic centrifuge flap door 315 is arranged on a right side within the central operation compartment 302 and on an upper left side of the temporary storage stand 310. A consumable lid opening/closing unit 316 is arranged on an upper right side within the central operation compartment 302. A linear motor gantry main frame structure 317 is arranged on a right side within the full-automatic liquid operation compartment 303. At left and right sides of an end portion of the linear motor gantry main frame structure 317 are provided pipetting units 318. A pump set 319 is disposed on a left front side of the full-automatic liquid operation compartment 303. A left side of the full-automatic liquid operation compartment 303 is provided with a unit for pumping and replenishing liquid 320. A consumable stage sliding table 321 is provided underneath the linear motor gantry main frame structure 317 and inside the full-automatic liquid operation compartment 303. A bottom-compartment liquid storage unit 322 is provided at a lower side within the full-automatic liquid operation compartment 303. On a left side within the full-automatic liquid operation compartment 303 is provided an oscillation unit 323 corresponding to the linear motor gantry main frame structure 317. A front side of an end portion of the linear motor gantry main frame structure 317 is provided with a consumable carrier 324. An operation stage 325 is disposed above the linear motor gantry main frame structure 317. The linear motor gantry main frame structure 317 is equipped with double-sided linear motors or a single motor with a guide rail structure, so as to realize X-axis operation of each unit. The pipetting unit 318 is mounted with one or two or four pipetting heads, and a corresponding number of movers are provided on a Y-axis straight line, so as to enable each pipetting head to be independently movable along the Y-axis and Z-axis. The pump set 319 is equipped with a multi-channel peristaltic pump or other types of pump bodies to pump liquid stored in the bottom compartment to the pipes on the table-board. The unit for pumping and replenishing liquid 320 fully automatically pumps large-capacity process liquid into a liquid transfer tank in the system, and the pipetting unit is transferred by a robot for orifice plates. After the liquid pumping operation, the pipe is subjected to fully automatic cleaning and closing operation. The consumable stage sliding table 321 can fully automatically slide out and slide in for loading consumables such as orifice plates, shake tubes, shake flasks and the like. The bottom-compartment liquid storage unit 322 is used to store process liquids such as culture medium, lysate and the like. The oscillation unit 323 realizes the mixing operation of consumables such as orifice plates, shake tubes and shake flasks during the process. The consumable carrier 324 is mounted with different types of consumables such as orifice plates, shake tubes, shake flasks and the like, based on actual process requirements. The operation stage 325 is used for attitude adjustment and temporary storage of materials in the process. By arranging the full-automatic core liquid operation system 3 in a controlled laminar flow environment as an entirety, the system environment is effectively isolated from the laboratory mounting environment, and the gas in the system is continuously circulated and filtered, thus ensuring the safety of personnel, samples and the environment during the operation. By providing the consumable loading channel and the sample loading channel in the storage compartment 301, it can: realize high throughput of parallel loading; allow operators to implement complicated operations in independent areas; and avoid the risk of polluting disposable consumables during loading of samples . The continuous loading unit 308 keeps moving continuously, the consumables placed by operators are continuously transferred to a front side of the corresponding drum, and the robot transfers the consumables to the drum position designated by the system, so that the operator can continuously implement loading operation, avoiding the congestion of a single loading channel; the robot can keep working at full load, greatly improving the transfer efficiency and the throughput; and continuous material transfer from the storage position to the central operation compartment can be realized, thus greatly improving efficiency and the throughput. A space is reserved in the middle of the central operation compartment 302 to allow slide-out of the consumable stage sliding table of the liquid operation compartment, which facilitates the loading and removal of the consumables on the sliding table and ensures the high transfer efficiency in the automatic operation process. The consumable stage sliding table of the full-automatic liquid operation compartment 303 sliding out and into the area of the central operation compartment can ensure the robot in the central operation compartment to perform high-efficiency loading and removal. The pipetting unit 318 improves the utilization efficiency of the system through real-time resource optimization: when consumables such as 24-well plates, 6-well plates, 8-well plates and shake flasks are operated, the two pipetting units operate in parallel in the left and right independent areas, which is equivalent to two pipetting units working in parallel, capable of improving operation efficiency by order of magnitude; when 96-well plates are operated, the two pipetting units are integrated into an 8-channel pipetting unit. There is no mechanical connection between the X-axis guide rail and the Y-axis cross beam of the gantry structure. When functions are to be added, a new module can be conveniently mounted from above the gantry structure and can come into use only by connection with electrical cables; when the working unit needs to be replaced or repaired, the working unit can be conveniently removed from above the gantry after the electrical connection is disconnected. During operation, a millimeter-level gas gap is maintained between the X-axis guide rail and the Y-axis cross beam, which eliminates the mechanical friction and the resultant dust pollution, and at the same time eliminates the requirement for grease lubrication by conventional servo structures and the pollution caused by grease volatilization.

Referring to Figs. 22-25, the full-automatic detection platform includes a turntable 401, a motor 402, a drag chain 403 and a rotary platform 404. The motor 402 is disposed in an interior of the turntable 401, the drag chain 403 is disposed on a right of the turntable 401, the rotary platform 404 is disposed on an end portion of the turntable 401, and the rotary platform 404 is provided with device installation and positioning holes 405. An HPLC501 is provided at a left rear side of an end portion of the full-automatic detection platform 5, a gel electrophoresis unit 502 is arranged on a right side of the HPLC501 on the end portion of the full-automatic detection platform 5, a ELISA analyzer 503 is arranged at a right rear side of the end portion of the full-automatic detection platform 5, and mass spectrometers 504 are symmetrically arranged at a front side of the end portion of the full-automatic detection platform 5. A linear module 505 is arranged in the middle of the end portion of the full-automatic detection platform 5, and a man-machine cooperative robot 506 is provided on the linear module 505. Sufficient space is reserved on the table-board of the full-automatic detection platform 5 for adding devices, such as counters, imagers, QPCRs, BRAs, etc. The automatic control system 6 includes a temperature sensor, a weight sensor, a differential pressure sensor, a photoelectric sensor, a camera, a code reader, an I/O acquisition module, an industrial personal computer, a drive module, an electric heating film, a robot, a pump, an electromagnetic valve, a centrifuge, a sliding table electric cylinder, a drive motor and a centrifugal fan.

Although the exemplary embodiments of the present disclosure have been described above with reference to the accompanying drawings, those skilled in the art should understand that the present disclosure is not limited to the specific structure that has been disclosed. Multiple changes and modifications may be made to the exemplary embodiments without substantively departing from the spirit and scope of the present invention. Accordingly, all the changes and modifications are encompassed within the protection scope as defined by the claims of the present invention.

## Claims

1. A system for expression, purification, and detection and screening of biological drugs, comprising:
at least one incubator, which is used for culturing biological samples to provide basic samples for the detection and screening of the biological drugs;
a liquid operation system, which is used for implementing predetermined operations on the biological samples cultured in the incubator;
a sample detection platform, which is used for detecting the biological samples to facilitate screening;
a transfer platform, which is used for transferring the biological samples between the incubator and the liquid operation system and/or between the liquid operation system and the sample detection platform; and
an automatic control system, which is configured to control operation of at least one of the incubator, the liquid operation system, the sample detection platform, and the transfer platform.

2. The system for expression, purification, and detection and screening of biological drugs according to claim 1, wherein the transfer platform comprises at least one of a cultured material transfer platform for transferring cultured biological samples between the incubator and the liquid operation system and a test sample transfer platform for transferring biological samples to be detected between the liquid operation system and the sample detection platform.

3. The system for expression, purification, and detection and screening of biological drugs according to claim 2, wherein at least one of the cultured material transfer platform and the test sample transfer platform comprises a robot.

4. The system for expression, purification, and detection and screening of biological drugs according to claim 3, wherein the robot is disposed on any one of a ground guide rail, an air guide rail and an automatic guided vehicle.

5. The system for expression, purification, and detection and screening of biological drugs according to claim 1, wherein the incubator comprises a housing and a culture assembly accommodated in the housing, and the culture assembly is provided on an automatic sliding table element to enable the culture assembly to slide out of or into the housing in a controlled manner.

6. The system for expression, purification, and detection and screening of biological drugs according to claim 5, wherein the incubator is configured to automatically control temperature and humidity of the biological samples, wherein a temperature inside the incubator is controlled between 16-38°C and a humidity inside the incubator is controlled between 70-95%.

7. The system for expression, purification, and detection and screening of biological drugs according to claim 6, wherein the incubator comprises a heating film for automatically heating the incubator to control the temperature inside the incubator between 16-38°C.

8. The system for expression, purification, and detection and screening of biological drugs according to claim 6, wherein the incubator comprises a humidifying unit, which includes an automatic water supply unit configured to supply water to the incubator in a controlled manner and an atomizer configured to atomize water from the automatic water supply unit to control the humidity in the incubator.

9. The system for the expression, purification, and detection and screening of biological drugs according to claim 5, wherein the incubator comprises a refrigeration compressor configured to control a temperature of the biological samples between 2-8°C when sedimentation and enrichment of the biological samples are needed.

10. The system for expression, purification, and detection and screening of biological drugs according to claim 1, wherein the liquid operation system is placed in a controlled laminar flow environment, so that an internal environment of the liquid operation system is isolated from its external environment.

11. The system for expression, purification, and detection and screening of biological drugs according to claim 10, wherein the liquid operation system is provided with a laminar flow unit configured to form the laminar flow environment in an interior of the liquid operation system by pressure difference.

12. The system for expression, purification, and detection and screening of biological drugs according to claim 11, wherein the laminar flow unit comprises a laminar air-supply unit including a centrifugal fan.

13. The system for expression, purification, and detection and screening of biological drugs according to claim 12, wherein the laminar flow unit further comprises a laminar air-return unit disposed at a bottom of the liquid operation system.

14. The system for expression, purification, and detection and screening of biological drugs according to claim 13, wherein the laminar air-return unit comprises a filter screen configured to filter out particulate matters in laminar gases before the laminar gases enter the interior of the liquid operation system.

15. The system for expression, purification, and detection and screening of biological drugs according to claim 1, wherein the liquid operation system comprises a storage compartment, a central operation compartment and at least one liquid operation compartment, wherein the storage compartment is used for storing consumables to support continuous operations of the system for expression, purification, and detection and screening of biological drugs, and the central operation compartment and the liquid operation compartment are used for implementing different operations on the biological samples.

16. The system for expression, purification, and detection and screening of biological drugs according to claim 15, wherein the liquid operation system comprises two liquid operation compartments disposed at two sides of the central operation compartment respectively and configured to be able to perform operation independent of each other as well as perform operation in parallel.

17. The system for expression, purification, and detection and screening of biological drugs according to claim 15, wherein the storage compartment comprises a consumable loading channel and a sample loading channel independent of each other, so as to realize parallel loading of consumables and the biological samples.

18. The system for expression, purification, and detection and screening of biological drugs according to claim 17, wherein the consumable loading channel and the sample loading channel extend in directions perpendicular to each other respectively.

19. The system for expression, purification, and detection and screening of biological drugs according to claim 17, wherein the consumable loading channel is provided therein with a robot transfer unit including a transfer robot.

20. The system for expression, purification, and detection and screening of biological drugs according to claim 19, wherein the transfer robot is arranged on a slide rail extending along the consumable loading channel and is slidable on the slide rail.

21. The system for expression, purification, and detection and screening of biological drugs according to claim 19, wherein a continuous loading unit is provided in the vicinity of the consumable loading channel, and the continuous loading unit is constructed in the form of a continuous loading turntable to realize continuous loading and unloading of the consumables.

22. The system for expression, purification, and detection and screening of biological drugs according to claim 21, wherein the continuous loading unit comprises an annular transmission element and consumable transfer trays disposed on the annular transmission element, and the transfer robot is configured to transfer the consumables onto the consumable transfer trays and/or transfer the consumables from the consumable transfer trays to other locations.

23. The system for expression, purification, and detection and screening of biological drugs according to claim 19, wherein the storage compartment comprises a plurality of storage drums for storing consumables, and each storage drum comprises a plurality of spaces arranged in a plurality of layers and columns for storing the consumables, and wherein the transfer robot is configured to transfer the consumables to corresponding spaces of corresponding storage drums for storage.

24. The system for expression, purification, and detection and screening of biological drugs according to claim 23, wherein the plurality of storage drums are arranged adjacent to the central operation compartment and the liquid operation compartments, so that the transfer robot in the storage compartment is capable of transferring the consumables in the storage drums to at least one of the central operation compartment and the liquid operation compartment.

25. The system for the expression, purification, and detection and screening of biological drugs according to claim 15, wherein the central operation compartment comprises an operation table-board mounted with at least one of following devices: a consumable lid opening/closing unit, a centrifuge unit, a vacuum filtration unit, a metal bath unit, a sample oscillation unit, a consumable storage rack, a secondary storage rack for secondary storage of materials, and a multi-degree-of-freedom robot.

26. The system for expression, purification, and detection and screening of biological drugs according to claim 25, wherein a laminar air-return mesh plate is provided on the operation table-board to allow a laminar returned-air to enter an internal space of the central operation compartment through the laminar air-return mesh plate.

27. The system for expression, purification, and detection and screening of biological drugs according to claim 25, wherein the multi-degree-of-freedom robot is mounted on a linear motor module, which includes a cross beam extending in a horizontal direction and a linear motor mounted on the cross beam and driving the multi-degree-of-freedom robot in a direction along which the cross beam extends.

28. The system for expression, purification, and detection and screening of biological drugs according to claim 25, wherein a space is reserved in a middle portion of the operation table-board of the central operation compartment, and the space reserved is configured to receive a consumable stage sliding table of the liquid operation compartment.

29. The system for expression, purification, and detection and screening of biological drugs according to claim 15, wherein the central operation compartment is configured to perform at least one of following operations: vacuum filtration operation, centrifugal separation, centrifugal enrichment, vibration mixing operation, consumable lid opening/closing operation, and metal bath incubation operation.

30. The system for expression, purification, and detection and screening of biological drugs according to claim 15, wherein the liquid operation compartment is configured to perform at least one of following operations: plasmid preparation and frozen tube lid opening/closing operation, culture and replenishment of the biological samples, transfection expression of biological samples, magnetic bead sorting, magnetic bead purification, and pretreatment of the biological samples to be detected.

31. The system for expression, purification, and detection and screening of biological drugs according to claim 30, wherein the liquid operation compartment comprises at least one pipetting unit configured to transfer liquid required in a process to perform corresponding operations.

32. The system for expression, purification, and detection and screening of biological drugs according to claim 31, wherein the pipetting unit is configured to be movable along a X axis and comprises one or more pipetting heads each of which is configured to be movable independently along a Y axis and a Z axis inside the pipetting unit, wherein the Y axis is in a horizontal plane and perpendicular to the X axis, and the Z axis is in a vertical plane and perpendicular to the X axis and the Y axis.

33. The system for expression, purification, and detection and screening of biological drugs according to claim 32, wherein the pipetting unit comprises one or more movers mounted along a direction of the Y-axis, so that each pipetting head is movable along the direction of the Y-axis under driving of the movers.

34. The system for expression, purification, and detection and screening of biological drugs according to claim 31, wherein the pipetting unit is mounted on a linear motor gantry main frame structure, which includes two guide rail structures spaced from each other and a cross beam extending between the two guide rail structures, the pipetting unit being provided on the cross beam.

35. The system for expression, purification, and detection and screening of biological drugs according to claim 34, wherein the guide rail structures are configured to extend along the X axis, and the cross beam is movable in a direction of the X-axis along the guide rail structures.

36. The system for expression, purification, and detection and screening of biological drugs according to claim 35, wherein the guide rail structures and the cross beam are components of a linear motor, wherein the guide rail structures constitute a stator of the linear motor and the cross beam constitutes a mover of the linear motor, and no mechanical connection is present between the guide rail structures and the cross beam.

37. The system for the expression, purification, and detection and screening of biological drugs according to claim 31, wherein the liquid operation compartment further comprises a unit for pumping and replenishing liquid and a pump set, wherein the unit for pumping and replenishing liquid is used for providing required process fluid to the pipetting unit, and the pump set is used for pumping the process fluid into pipes of the unit for pumping and replenishing liquid.

38. The system for expression, purification, and detection and screening of biological drugs according to claim 31, wherein the liquid operation compartment further comprises an operation stage and a consumable stage sliding table for supporting the operation stage, and the consumable stage sliding table is configured to be able to slide out of and slide into the liquid operation compartment in a controlled manner so as to facilitate loading or unloading of the consumables onto or from the operation stage.

39. The system for expression, purification, and detection and screening of biological drugs according to claim 38, wherein when the consumable stage sliding table slides out of the liquid operation compartment, it is received in a corresponding space of the central operation compartment.

40. The system for expression, purification, and detection and screening of biological drugs according to claim 31, wherein the liquid operation compartment comprises two or more pipetting units, which are configured to run independently or in parallel in two or more independent operation areas when a small amount of consumables are in operation, and configured to be integrated together to run integrally when a large amount of consumables are in operation.

41. The system for expression, purification, and detection and screening of biological drugs according to claim 1, wherein the sample detection platform is configured to perform at least one of following operations: chromatographic sample preparation, high performance liquid chromatography detection, mass spectrometry detection, gel electrophoresis detection, ELISA analyzer detection, and endotoxin detection.

42. The system for expression, purification, and detection and screening of biological drugs according to claim 1, wherein the sample detection platform is equipped with at least one of following detection devices: a high performance liquid chromatograph, a mass spectrometer, a ELISA analyzer, a gel electrophoresis apparatus, an endotoxin detector, a counter, an imager and a real-time fluorescence quantitative analyzer.

43. The system for expression, purification, and detection and screening of biological drugs according to claim 42, wherein the sample detection platform comprises a man-machine cooperative robot which is used for transferring the biological samples to be detected to different detection locations on the sample detection platform.

44. The system for expression, purification, and detection and screening of biological drugs according to claim 43, wherein the man-machine cooperative robot comprises a force feedback unit.

45. The system for expression, purification, and detection and screening of biological drugs according to claim 43, wherein the man-machine cooperative robot is provided on a linear module and movable along the linear module.

46. The system for expression, purification, and detection and screening of biological drugs according to claim 42, wherein the sample detection platform comprises a detection device mounting turntable including a rotary platform on which the detection devices are mounted, wherein the rotary platform is capable of rotating the detection device to a side facing the man-machine cooperative robot to implement detection operation and to a side facing operators to implement liquid replacement and/or maintenance.

47. The system for expression, purification, and detection and screening of biological drugs according to claim 46, wherein the rotary platform is configured to be driven by a motor via a drag chain to rotate.

48. The system for expression, purification, and detection and screening of biological drugs according to claim 5, wherein the incubator is provided with a CO₂ pipe for replenishing CO₂ into the incubator and a CO₂ sensor for measuring a concentration of CO₂ in the incubator, so as to control the concentration of CO₂ in the incubator.

49. The system for expression, purification, and detection and screening of biological drugs according to claim 48, wherein the incubator is further provided with a CO₂ inflation valve for controlling the replenishment of CO₂ and a CO₂ pipe filter for removing impurities in CO₂.
